Europäisches Patentamt

European Patent Office

Office européen des brevets

(19)

(11) Publication number: **0 171 957 B1**

## EUROPEAN PATENT SPECIFICATION

(12)

(45) Date of publication of patent specification: **20.10.93** (51) Int. Cl.⁵: **G11B 5/49**, G11B 5/245, G11B 5/127

(21) Application number: **85305327.0**

(22) Date of filing: **25.07.85**

(54) Electromagnetically controlled scanning magnetic transducer.

(30) Priority: **16.08.84 US 641817**

(43) Date of publication of application:
**19.02.86 Bulletin 86/08**

(45) Publication of the grant of the patent:
**20.10.93 Bulletin 93/42**

(84) Designated Contracting States:
**DE FR GB IT NL**

(56) References cited:
**US-A- 3 435 440
US-A- 3 555 204
US-A- 3 845 503
US-A- 4 322 763
US-A- 4 414 595**

(73) Proprietor: **AMPEX CORPORATION
401 Broadway
M.S. 3-35
Redwood City California 94063-3199(US)**

(72) Inventor: **Gooch, Beverley R.
703 Chopin Drive
Sunnyvale California(US)**

(74) Representative: **Horton, Andrew Robert Grant
et al
BOWLES HORTON
Felden House
Dower Mews
High Street
Berkhamsted Hertfordshire HP4 2BL (GB)**

**Description**

This invention relates to electromagnetically controlled scanning magnetic transducers wherein the location of a recording/reproducing zone within the transducer is controlled by electromagnetic rather than mechanical means.

BACKGROUND OF THE INVENTION

In wideband magnetic signal recording, great emphasis is on obtaining a high relative transducer-to-recording medium speed. Increasing the speed of the recording medium past a stationary transducer is limited by large medium consumption which would result, as well as by mechanical limitations associated with the high speed of transport.

Rotary head transducers utilized in magnetic tape recorders represent a significant development in increasing the relative head-to-tape speed. Here the transducer rotates at high speed in contact with a relatively slowly advancing magnetic tape. Depending on the angle at which the transducer sweeps the tape there are two basic types of rotary scan recorders, which are generally referred to as transverse and helical scan recorders. There are many problems associated with obtaining a desired accuracy and reproducibility of the signal recorded by rotary head recorders. For example, it is necessary to maintain very small mechanical tolerances of the rotating drum, the transducer structure and the location of the transducer within the drum. At the same time it is necessary to accurately maintain the rotational speed of the drum with respect to the longitudinal tape speed.

In magnetic recorders utilizing electromagnetically controlled scanning transducers the disadvantages associated with mechanically rotating the transducers are eliminated. Here the transducers are stationary and the high scanning speed is obtained by electromagnetically scanning the signal to be transduced across the width of the transducer and thereby across the recording medium.

For example, one known scanning magnetic transducer has stacked magnetic laminations separated from each-other by nonmagnetic spacers. Each lamination represents a closed magnetic circuit comprising a transducing gap. The stacked laminations have leg portions of controlled width gradually increasing in opposite directions on opposite sides of the transducer which leg portions are linked by control windings. The scanning operation is obtained by gradually saturating the leg portions on opposite sides of the transducer so that only one lamination at a time remains in a transducing mode. The location of the operating lamination is controlled by control currents applied to the control windings.

In this type of prior art transducer, scanning is obtained by sequentially interrupting the magnetic circuit of each lamination thereby interrupting the transducing flux path. Because it is necessary to use leg portions of varying width, the controlled width portions, and resulting interruption zone, must be at distant locations from the transducing gap and transducer face. Consequently the unsaturated portions facing a recording medium are susceptible to picking up crosstalk from adjacent active laminations or stray flux from adjacent recorded signal tracks on the medium. These picked-up signals may then be re-recorded on the medium or, at playback, they may leak into the magnetic circuit of an adjacent active element and cause degradation of the playback signal provided thereby. It will be appreciated that the above indicated disadvantages become more significant with increased frequency and density of recording.

It is a further significant disadvantage of these prior art transducers that, in order to reduce cross-talks, between the laminations each magnetic lamination of the stack must be physically and magnetically separated from adjacent laminations. Therefore, only an incremental scanning motion across the medium is possible and this is obtained by sequentially switching on/off the magnetic circuits of adjacent laminations, that is, in a discrete step-like manner, rather than continously. Also, track width must thus be not less than the width of a single lamination and is adjustable only to integral multiples of this width.

The foregoing is a disadvantage particularly in high frequency wideband recording/reproduction on narrow tracks where continuous scanning as well as accurately locating the transducing element over a narrow track are essential requirements for high quality performance.

US-A-3845503 discloses a magnetic transducer in which the position of a transducing zone may be moved along the width of the transducing gap. The core material is anisotropic, the relatively hard axis being along the width of the transducing gap. A pair of coils aligned parallel with the hard axis direction are energised so as to shift a region of minimum magnetic flux along the width of the transducer.

US-A-3555204 discloses a magnetic transducer having the features of the precharacterising portion of claim 1 herein. In the transducer described in this document, control windings pass through apertures in the side legs of the laminations of the core portions to produce local saturation of the side legs, which increase progressively in breadth.

EP 0 171 957 B1

The invention provides a magnetic transducer, comprising a magnetic core having confronting core portions with poles abutting at a transducing gap plane to define a transducing gap therebetween, and control means associated with each core portion to provide control flux therein to provide by selective saturation of the core portions a permeable transducing zone, characterised in that the said control means and the core portions are disposed so that the said control flux saturates selectively a face portion, adjacent said transducing gap, of the respective core portion, such that each saturated face portion delimits in a respective one of two opposite directions a respective adjacent nonsaturated permeable face portion, said permeable face portions overlapping across the transducing gap to define the permeable transducing zone.

The control means may be arranged for applying control flux to one of said core portions to cause a region of the associated face portion near one end of the transducer to be magnetically saturated and the remaining area of the face portion to be unsaturated and for applying control flux to the other core portion to cause a region of the face portion associated with said other core portion near the opposite end of the transducer to be magnetically saturated and the remaining area of this face portion to be unsaturated in a manner such that portions of the unsaturated areas of the two face portions lie adjacent one another in a direction transverse to the width of said gap to define the permeable transducing zone, through which transducing flux enters and exits said face portions.

In some embodiments of the invention the core portions have reluctances increasing in opposite directions along the transducer's width. More particularly, each core portion may have a magnetic reluctance gradient from one end to another in a direction along the width of said gap, the reluctance gradients of said core portions being oriented in opposite directions, and each face portion being magnetically saturated at its end adjacent that end of the associated core portion which has the lower reluctance.

In another embodiment of the invention, each core portion has a plurality of stacked magnetic laminations separated by nonmagnetic conductive laminations, each said control means comprising a conductive drive line extending across the width of the respective core portion inwardly of and at a selected distance from said transducing gap plane and the respective face portion, the drive lines being conductively connected with the conductive laminations of the respective core portion; and said conductive laminations of each core portion are coupled to selectively apply control currents to said conductive drive lines respectively, for selectively saturating said face portions.

Furthermore, the preferred embodiments of the invention do not require the use of discretely operating separate magnetic laminations. Thus, the location of the highly permeable transducing zone can be continously controlled along the width of the transducer by the electromagnetic control means. Any desired width of the transducing zone can be obtained by selecting corresponding control current magnitudes. The transducing zone width is thus not limited to the width of one or more stacked transducing laminations, as in the prior art transducers. Consequently, in the non-laminated embodiments of the invention, the transducing zone can be narrowed, widened or otherwise modified by the electromagnetic means in a continuous manner.

In accordance with a preferred embodiment of the invention, the above-mentioned desired steep flux density versus permeability gradient across the transducer width is obtained by arranging in each confronting core a control winding which is angularly displaced with respect to both the transducer face and transducing gap plane, respectively. A saturable core portion in the form of a wedge section is thereby formed, including an area between the transducer face and transducing gap plane. The wedge sections in the confronting cores are oppositely oriented such that their cross sectional areas increase in opposite directions on each side of the transducing gap. The cross-sectional areas, including the face of each core, are selectively saturated by applying respective control currents to the control windings. The saturated cross sectional areas of each core define there-between a non-saturated highly permeable transducing zone which extends at the transducer face across the transducing gap.

In a further preferred embodiment of the invention, the desired steep gradient is obtained at the transducer face by providing control flux paths of a substantially constant cross section and gradually increasing lengths in opposite directions across the width of each core.

Alternative embodiments of the invention include a laminated core structure comprising a plurality of magnetic laminations separated from each-other by conductive laminations. A conductive drive line extends through each core at a selected distance from the transducer face and transducing gap plane. Portions of the drive line are connected to the conductive laminations. Control currents are differentially switched into these portions of the drive line to saturate portions of selected magnetic lamination at the transducer face adjoining the transducing gap. While these alternative embodiments have laminated core structures, they eliminate crosstalk pick-up at the transducer face.

3

## BRIEF DESCRIPTION OF THE DRAWINGS

FIGURE 1A is a schematic perspective view illustrating operation of a prior art magnetic transducer without the electromagnetically controlled scanning operation.

FIGURE 1B shows orientation of magnetic particles on a tape as recorded by the transducer of FIGURE 1A.

FIGURE 1C is a schematic perspective view illustrating operation principle of an electromagnetically controlled scanning magnetic transducer of the invention.

FIGURE 1D is a front elevation view of the transducer of FIGURE 1C.

FIGURES 1E and 1F show various operation modes of the transducer of FIGURE 1C.

FIGURE 2A is a simplified perspective view of an electromagnetically controlled scanning magnetic transducer in accordance with a preferred embodiment of the invention.

FIGURES 2B to 2D respectively show various forms of recording which can be obtained when utilizing the transducer of the present invention.

FIGURE 3A is a schematic diagram of a control circuit utilized to drive the transducer of the invention.

FIGURE 3B is a control voltage versus control current characteristic obtained by the circuit of FIGURE 3A.

FIGURE 4 is a more detailed representation of the transducer shown in FIGURE 2A.

FIGURE 5 is an enlarged perspective view of a satuarable wedge section of the transducer of FIGURE 4.

FIGURE 6 is an example of a flux density versus permeability characteristic of a well known magnetic material.

FIGURE 7A shows a front elevation view of oppositely oriented saturable wedge sections of the transducer of FIGURE 4 rotated by 90 degrees.

FIGURE 7B shows two superposed flux density versus permeability characteristics of FIGURE 6, each corresponding to one saturable wedge section of FIGURE 7A.

FIGURES 8 to 11 show a preferred method of manufacturing the transducer of FIGURES 2A and 4.

FIGURES 12 to 16 show another preferred embodiment of the invention;

FIGURES 17 to 20 show an alternative embodiment of the invention; and

FIGURES 21 to 25 show respective diagrams illustrating the operation of the embodiment of FIGURES 17 to 20.

## DETAILED DESCRIPTION

In the following specification and drawings like elements will be designated by like reference numerals. The description of similar elements and circuit portions may not be repeated with reference to subsequent drawing figures related to various embodiments of the invention.

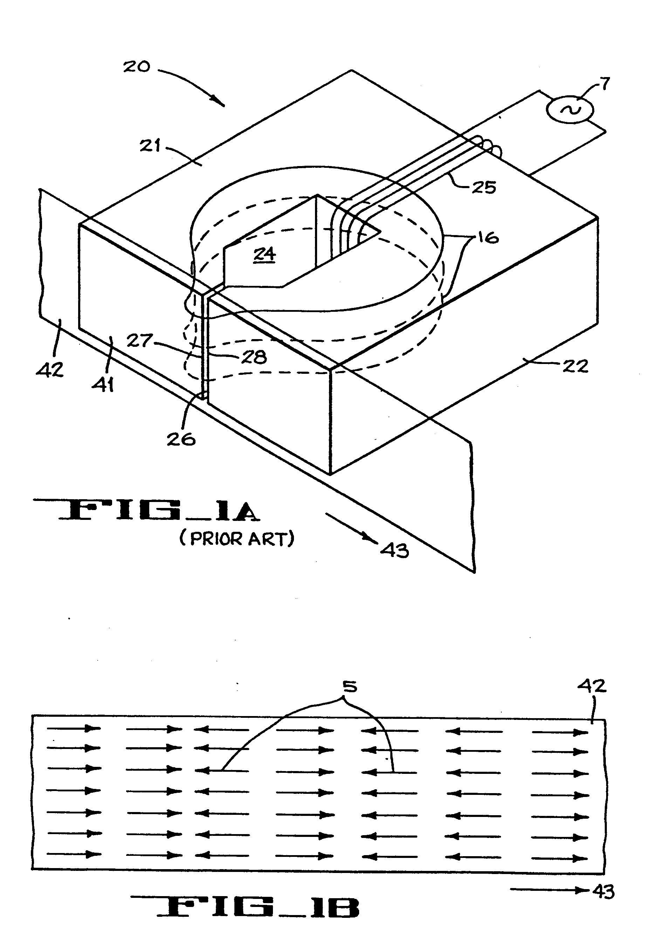

To facilitate description of the operating principle of the electromagnetically controlled scanning transducer of the invention a basic transducing operation of a known magnetic transducer will be first described with reference to FIGURES 1A and 1B without considering the electromagnetically controlled scanning operation. Thereafter the scanning operation will be described with reference to FIGURES 1C and 1D.

FIGURE 1A schematically shows a magnetic transducer 20 of a conventional design, having confronting magnetic core portions, also referred to as cores 21, 22 with poles 27, 28 defining a transducing gap 26 therebetween. A transducing winding window 24 is provided to accommodate transducing windings 25. The transducing gap 26 comprises a nonmagnetic material, for example silicon dioxide or glass, as well known in the art. When a recording signal current is applied to the transducing winding 25, for example form a signal source 7, for recording on a magnetic medium such as tape 42, a magnetic field is formed within the transducer as represented by flux lines 16. The magnetic field is emitted from the transducing gap 26 in the form of a fringing flux and engages the tape 42. The tape is shown in FIGURE 1A as transparent to reveal a portion 41 of the transducer 20, which faces the tape and which portion will be further referred to as face 41.

The fringing flux impresses on tape 42 a magnetic pattern corresponding to the signal in the winding 25. By advancing the magnetic tape past the transducing gap 26, for example in the direction of arrow 43, a changing magnetic signal pattern will be recorded along the tape as it is shown in FIGURE 1B by arrows 5.

When transducer 20 is utilized as a reproduce head, to reproduce a previously recorded signal such as shown at 5 on tape 42, the flux emanating from the longitudinally moving tape 42 engages the gap 26 and is picked up thereby. The transducer 20 changes the magnetic flux 16 traversing the transducing windings 25 into an electric signal that is proportional to the recorded flux.

In accordance with the present invention and as schematically shown in FIGURES 1C and 1D, the transducer face 41 may be selectively saturated on opposite sides of the transducing gap 26 as it is shown by cross-hatched saturated regions 57, 58. Saturation of regions 57, 58 is obtained by control means 8, 9 shown in phantom, respectively associated with each transducer core 21, 22. The control means 8, 9 comprise respective control windings (not shown) each linking one core 21, 22 in a manner which will be further described in more detail. The control means 8, 9 supply a control current I1, I2 to induce a control flux 47, 48 in each core 21, 22. The magnitudes of the control currents I1, I2 are selected such that the flux induced thereby saturates a region 57, 58 of a selected width W1, W2 in each core half as mentioned previously and as shown by cross-hatched areas in FIGURES 1C and 1D. The saturated regions 57, 58 define respective adjacent highly permeable nonsaturated portions or regions 40, 46 which overlap across the transducing gap 26. The overlapping portions 40, 46 define a highly permeable transducing zone 56 of a width W3, extending across the gap 26. It is seen from FIGURE 1C that the total transducing gap width $W = W1 + W2 + W3 = $ const.

By increasing the magnitude of one control current, for example I1, while proportionally decreasing the magnitude of the other control current I2, the respective widths W1, W2, change proportionally and the transducing zone 56 can be selectively moved along the width W of the transducing gap 26. For example, when it is desired to periodically scan the transducing zone 56 at a high speed along the transducer width W, a control circuit can be utilized which periodically changes inversely linearly the magnitudes of both currents I1, I2 thereby proportionally changing the widths W1, W2 of the saturated portions 57, 58. To maintain a constant width W3 of the transducing zone 56 during scanning, it is necessary to maintain a constant sum of the changing control currents, that is $I1 + I2 = $ const.

It will be appreciated that in the preferred embodiment of the invention it is possible to continously change the width W3 of transducing zone 56 if desired, by changing the combined widths $W1 + W2$ of the saturated portions 57, 58. Consequently, the transducing zone width W3 can be continously narrowed, widened or otherwise modified.

As it is seen from FIGURE 1C, the transducing flux path 16 extends around the winding window 24 and intercepts the transducing winding 25. While the control flux lines 47, 48 extend in parallel planes with respect to transducing flux 16, the respective magnitudes of the control currents are selected such that the control flux 47, 48 does not link the transducing winding 25 to avoid any interference with the signal flux 16.

FIGURE 1E illustrates an example of one mode of operation in which the electromagnetically controlled scanning magnetic transducer 20 of FIGURE 1C is utilized for recording and/or reproduction. The transducer 20 is shown with the transducing gap area 26 sufficiently enlarged to allow showing therein a magnetization pattern corresponding to the transducing flux 16. In FIGURE 1E a magnetic medium, for example tape 42 is transported longitudinally, that is in the direction of arrow 43, in close proximity to the transducing gap 26, and substantially in perpendicular to the transducer width W. In this mode of operation the electromagnetic control means 8, 9 are utilized to periodically differentially saturate the regions 57, 58 thereby periodically varying the location of the transducing zone 56 along the width W of the transducer. By differentially saturating the regions 57, 58 it is understood that each control means 8, 9 saturates a selected width W1, W2, of each core 21, 22 respectively, on the opposite side of the transducing gap. The difference between the combined widths $W1 + W2$ and the core width W determines the resulting width W3 of the transducing zone 56 ($W3 = W$-($W1 + W2$)). It is possible to change the transducing zone width W3 by changing the above-indicated combined widths $W1 + W2$, as previously mentioned.

Scanning operation along recording tracks, such as shown at 35 in FIGURE 1E, is obtained when the location of the transducing zone 56 moves along the width W, that is in the direction indicated by arrow 10, while the widths W1, W2 change inversely linearly with respect to each-other to maintain a constant width W3 of the transducing zone 56. In the above-described scanning operation, which is generally referred to as transverse recording/reproduction, the width W corresponds to the length of scan on the magnetic tape 42. This type or recording is characterized by a magnetization pattern 14 extending substantially orthogonally to the direction of scan indicated by arrow 10, which pattern is recorded along parallel tracks 35 which in turn extend substantially orthogonally across the width of the tape 42. The length L of the transducing gap 26 corresponds to the recorded "track width" TW. In recording mode, the magnetic state of the tape will be determined by the direction of the record flux at the approximate "trailing edge" of the transducing zone 56 which is advanced along the track 35 by the scanning action. It follows from the foregoing that the width W3 of the transducing zone 56 is comparable to gap length of a conventional rotating magnetic transducer which is utilized for transverse recording. Therefore the zone width W3 must be smaller than the shortest wavelength to be recorded to obtain necessary high resolution.

In FIGURE 1F an example of another mode of operation of the scanning magnetic transducer 20 of FIGURE 1C is shown, as being utilized for recording/reproduction along a longitudinal track 13 of a magnetic tape 42, transported with respect to transducer 20 in a manner similar to that in FIGURE 1E. However, as different from FIGURE 1E, when transducer 20 is utilized for recording, the widths W1, W2 of the saturated regions 57, 58 are maintained constant by the control means 8, 9 thereby maintaining a fixed position and constant width W3 of the transducing zone 56. The foregoing is obtained by maintaining selected constant magnitudes of the control currents I1, I2 applied by means 8, 9. The resulting magnetization pattern obtained on the recorded track 13 is generally referred to as longitudinal recording.

When utilizing the transducer 20 of FIGURE 1F for reproducing a signal, such as recorded on track 13, the respective widths W1, W2 can be differentially varied by the control means to reposition the transducer zone 56 in either direction indicated by arrows 10, 11 that is, across the width W3 of track 13. The foregoing operation mode may be particularly useful to maintain an optimum position of the transducing zone 56 over a recorded track to optimize recording/reproducing performance. The latter mode of operation may be utilized when reproducing a signal recorded for example on transverse, helical or longitudinal tracks of a magnetic medium.

It is also possible to select one desired track width W3 for recording and another, for example narrower track width, for playback, by simply changing the widths W1, W2 of the saturated regions of each core, as previously mentioned.

In another operating mode the location of the transducing zone 56 can be repositioned with a desired high accuracy to predetermined discrete locations on a magnetic medium as it may be required in connection with a particular recording scheme.

It should be understood from the above description, that in all the above-indicated operation modes the transducer of the invention is saturated at its face and in proximity of the transducing gap. Consequently, susceptibility to any crosstalk or stray flux pick-up by a non-operating, electromagnetically blocked core portion is eliminated.

To obtain a high quality performance by the scanning transducer of the invention, a well defined boundary between adjacent saturated and nonsaturated areas of the cores 21, 22 is desirable. The foregoing is obtained by arranging the confronting magnetic cores and control windings within each core such a way that a maximum rate of change in permeablity between adjacent cross-sectional areas of each transducer core is obtained across the transducer width W. The foregoing assures that while a selected area at the face of each core is saturated by a control current, so that no appreciable flux passes therethrough, an immediately adjacent contiguous area remains sufficiently permeable as it is necessary for transducing information signals. Consequently, the performance of the transducer 20 depends on the steepness of a permeability versus flux density gradient between each adjacent saturated and non-saturated region within each core.

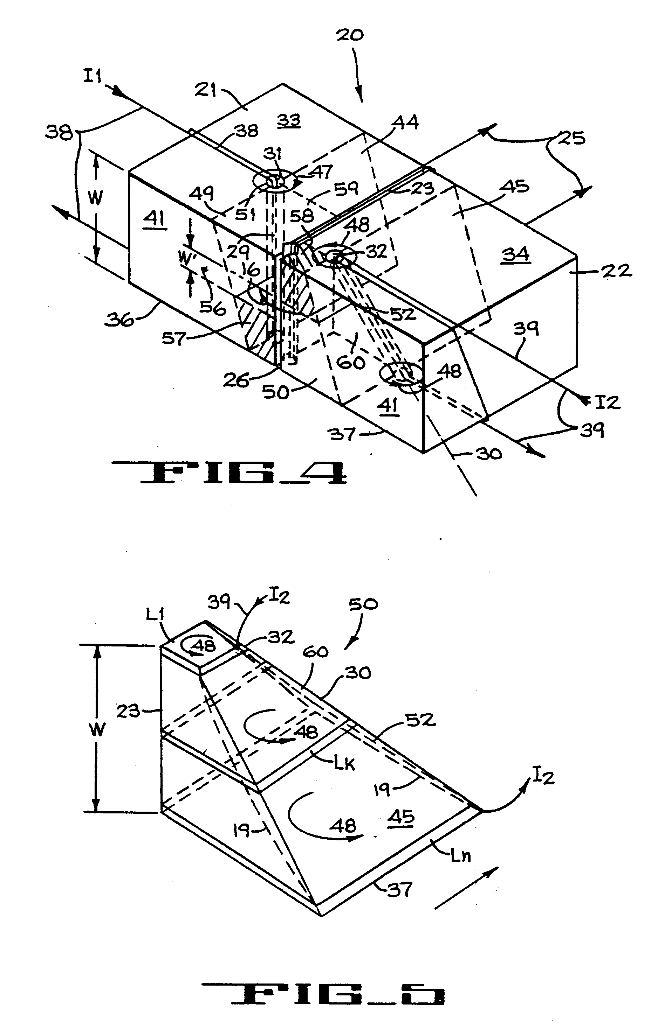

As an example, FIGURE 6 shows a well known permeability m versus flux density B characteristic of a suitable magnetic core material, for example ferrite PS52B made by Ampex Corporation. As it is seen from that characteristic, a relatively high permeability m, greater than 400, is obtained at a flux density B below $B1 = 4000$ Gauss, which high permeability is sufficient for a desired transducing operation. The saturation flux density of that material is approximately $B2 = 6000$ Gauss, corresponding to a permeability below 100, as shown in FIGURE 6. Consequently, for obtaining a desired rapid transition between a highly permeable region and an adjacent saturated region within the transducer core, the permeability must change rapidly from below 100 to over 400 in either direction, as it is seen from FIGURE 6.

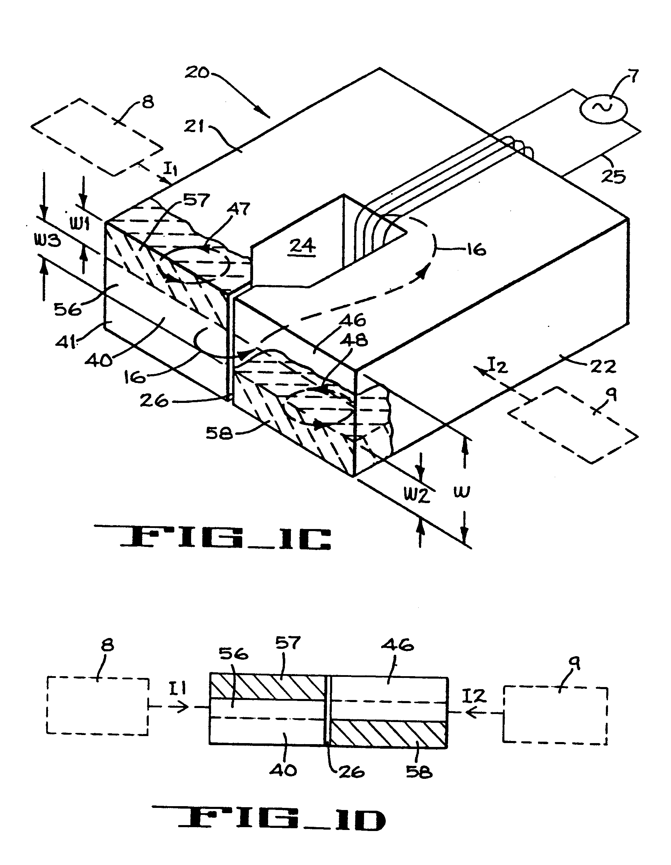

Now a preferred embodiment of the electromagnetically controlled scanning magnetic transducer of the present invention will be described in detail with reference to FIGURE 2A. A magnetic transducer 20 has two corresponding magnetic cores 21, 22 having confronting poles 27, 28 abutting at a smoothly lapped and polished transducing gap plane 23. A winding window 24 is provided in one or each core 21, 22 to accommodate transducing windings 25. A suitable nonmagnetic material is provided between pole faces 27, 28 to obtain a transducing gap 26, utilizing conventional transducing gap forming techniques. A transducer face 41, facing a magnetic medium for example tape 42, shown in FIGURES 2B to 2D, extends in a plane substantially perpendicular to the gap plane 23. The transducer may be contoured, if desired, as it is shown by interrupted lines 18, to obtain a desired contour and transducing gap depth respectively, utilizing well known contouring techniques.

In accordance with an important feature of the embodiment of FIGURE 2A, apertures 31, 32 are provided in each corresponding core 21, 22, respectively. These apertures extend across the entire width W of transducer 20 at respective selected angles to both the transducing gap plane 23 and to the face 41 of the transducer. Control windings 38, 39 are wound around each core 21, 22 in such a way that portions 51, 52 thereof extend through apertures 31, 32 respectively.

In the preferred embodiment of FIGURE 2A cores 21, 22 are manufactured as two identical core halves, for example from a block of magnetic ferrite material such as ferrite PS52B or single crystal ferrite. The apertures 31, 32 may be obtained by diamond drilling through the width of each core half, that is, from upper lateral surfaces 33, 34 to the opposite lower surfaces 36, 37 respectively. Each core half 21, 22 is smoothly lapped and polished at the gap plane 23. A suitable nonmagnetic transducing gap forming material, such as glass is provided on plane 23 of one or both cores, for example by sputtering in a vacuum. The thusly prepared core halves 21, 22 are assembled by rotating one core half with respect to the other one by 180 degrees so that the upper and lower surfaces thereof are reversed, to obtain confronting cores with an inversely symmetrical arrangement of the apertures 31, 32 with respect to planes 23 and 41, respectively. Thus, in the assembled confronting transducer cores 21, 22 the control winding apertures 31, 32 extend in an oppositely oriented angular relationship with respect to both the transducing gap plane 23 and face 41. The assembled core halves are glass-bonded together, utilizing well known bonding techniques, at the transducing gap plane 23, to obtain the transducing gap 26.

Alternatively, confronting cores 21, 22 could be made of a common solid block of magnetic material, if desired. In that case, a slot of a desired width corresponding to transducing gap length is provided inwardly of face 41, for example by grinding. The slot is subsequently filled with a suitable nonmagnetic material to obtain a transducing gap 26. The winding window 24 is then obtained by drilling across the transducer width utilizing known drilling techniques.

As it will follow from further detailed description, control windings 38, 39 serve to carry control currents I1, I2 for differentially saturating selected portions of each core 21, 22 at the transducer face 41 to obtain an unsaturated highly permeable transducing zone 56 extending across the transducing gap 26, as it has been described before with respect to FIGURES 1C and 1D.

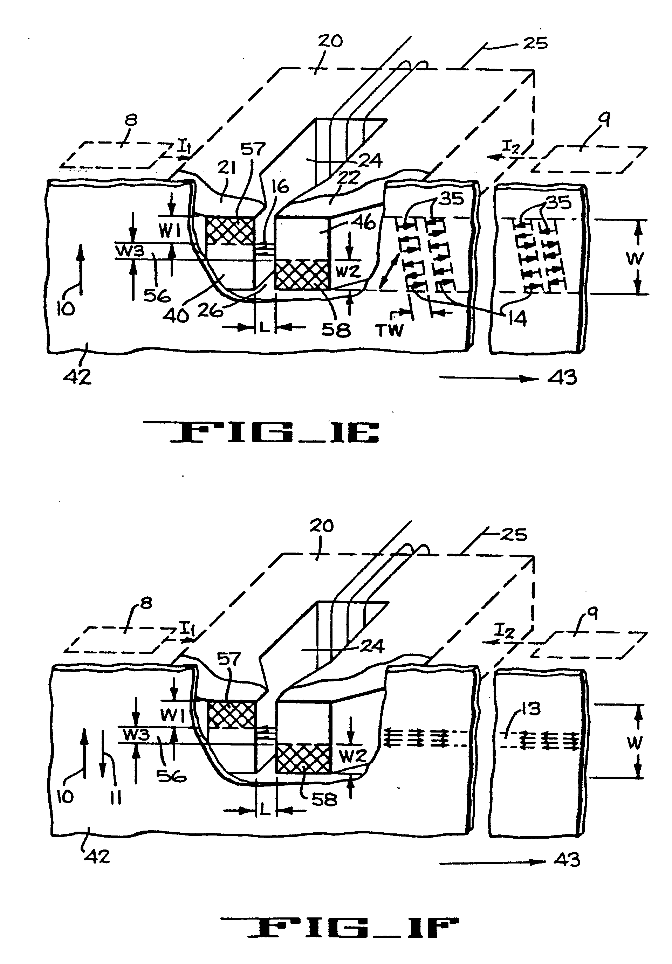

To obtain selected saturated regions at the face 41 of each core 21, 22 as previously described, a control circuit, for example shown in FIGURE 3A is utilized to supply respective control currents I1, I2 to control windings 38, 39 as it will be described below.

In the preferred embodiment the control currents I1, I2 are varied differentially to periodically scan a transducing zone of a constant width across the the width W of the transducer. Thereby an information signal is recorded or reproduced along transverse tracks 35 of a longitudinally moving magnetic tape 42, as shown in FIGURE 2B. It will be understood, however, that alternatively other recording/reproducing applications can be obtained.

For example, when current values I1, I2 are maintained constant the transducing zone will assume a fixed position. This latter application may be useful to obtain recording along longitudinal tracks such as shown at 13 in FIGURE 2D. During recording/reproduction on longitudinal or helical tracks, the position of the transducing zone may be stepped from track to track. In other applications recorded helical tracks as shown in FIGURE 2C may be reproduced by the transducer of the invention fixedly mounted in a rotating drum, while the position of the transducing zone may be moved across the recorded track width to assume optimum playback performance.

FIGURE 3A is an example of a schematic control circuit diagram 54 which is utilized to drive the control windings 38, 39 of transducer 20 of FIGURE 2A to control the position of a transducing zone at face 41 along the width W of the transducer 20. In the presently described preferred embodiment the transducing zone 56 is periodically scanned along transverse tracks 35 of magnetic tape 42, as shown in FIGURES 1E and 2B. It will be understood however that the control circuit 54 may be adapted to obtain different operating modes of the transducer 20 when utilized in other recording/reproducing applications as previously mentioned.

The circuit 54 of FIGURE 3A utilizes a control voltage source 61 generating a periodically changing control voltage Vc. Voltage Vc is converted by the circuit of FIGURE 3A into differentially changing control currents I1, I2 as follows.

The voltage Vc is applied via a resistor 62 to an inverting input of a first operational amplifier 63, which has a feedback resistor 64, and represents a voltage follower. The output of amplifier 63 is connected via a further resistor 65 to an inverting input of a second operational amplifier 66 which has a feedback resistor 67. Amplifier 66 inverts the output signal of amplifier 63. The output of first amplifier 63 is also connected via a resistor 68 to an inverting input of a third operational amplifier 69 having a feedback resistor 70. The output of second amplifier 66 is connected via a resistor 71 to an inverting input of a fourth amplifier 72 having a feedback resistor 73. An adjustable potentiometer 74 is connected between a source of negative D.C. voltage and ground to obtain a control current offset Io. The output of potentiometer 74 is connected via a resistor 75 to the inverting input of third amplifier 69 and via a resistor 76 to the inverting input of fourth amplifier 72, respectively.

The output of the third amplifier 69 is connected to the previously described first control winding 38 of transducer 20, which in turn is connected via feedback resistor 70 to the inverting input of amplifier 69. Similarly, the output of the fourth amplifier 72 is connected to the previously described second control winding 39, whose second terminal is connected via feedback resistor 73, to the inverting input of amplifier 72. The connection between coil 38 and resistor 70 is grounded via a resistor 77. Similarly, the connection between coil 39 and resistor 73 is grounded via a resistor 78. The respective non-inverting inputs of all four operational amplifiers 63, 66, 69 and 72 are grounded. The amplifiers 69, 72 and respective resistors 70, 77 and 73, 78 represent a first and second current source, respectively.

In operation, the voltage Vc from source 61 is applied via voltage follower 63, 64 to a first current source 69, 70, 77 which applies to the first control winding 38 a control current I1, directly proportional to input voltage Vc. The voltage obtained at the output of amplifier 63 and inverted by the inverter 66, 67 is further applied to the second current source 72, 73, 78 which applies to the second control winding 39 a control current I2 inversely proportional to the input voltage $V_c$. The potentiometer 74 connected to a negative DC voltage sets a desired control current offset Io, which in the presently described embodiment is half way between the minimum and maximum control current values, that is Io = (Imax-Imin)/2, as it will be described below in more detail with reference to FIGURE 3B.

It follows from the foregoing description that when voltage Vc has a periodically changing amplitude between Vcmin and Vcmax as shown in the diagram of FIGURE 3B, circuit 54 converts the thusly changing control voltage into substantially linearly changing control currents I1, I2 obtained at the respective outputs of the first and second current source, respectively. The control currents I1, I2, thus change differentially, that is in opposite sense with respect to each other while changing substantially in linear proportion to the input voltage Vc as depicted in FIGURE 3B and defined by the following equations:

$$I1 = KV_c + Io \qquad (1)$$
$$I2 = -KV_c + Io$$

where K and Io are constants dependent on the parameters of the circuit of FIGURE 3A and can be derived therefrom.

With further reference to the previously described preferred embodiment of FIGURE 2A, currents I1, I2 induce magnetic flux in the magnetic cores surrounding the control winding portions 51, 52 extending therethrough. The control currents I1, I2 are utilized to saturate selected regions of the magnetic cores 21, 22 at face 41 to obtain between the saturated regions an unsaturated highly permeable track zone in accordance with the present invention, as it is described below.

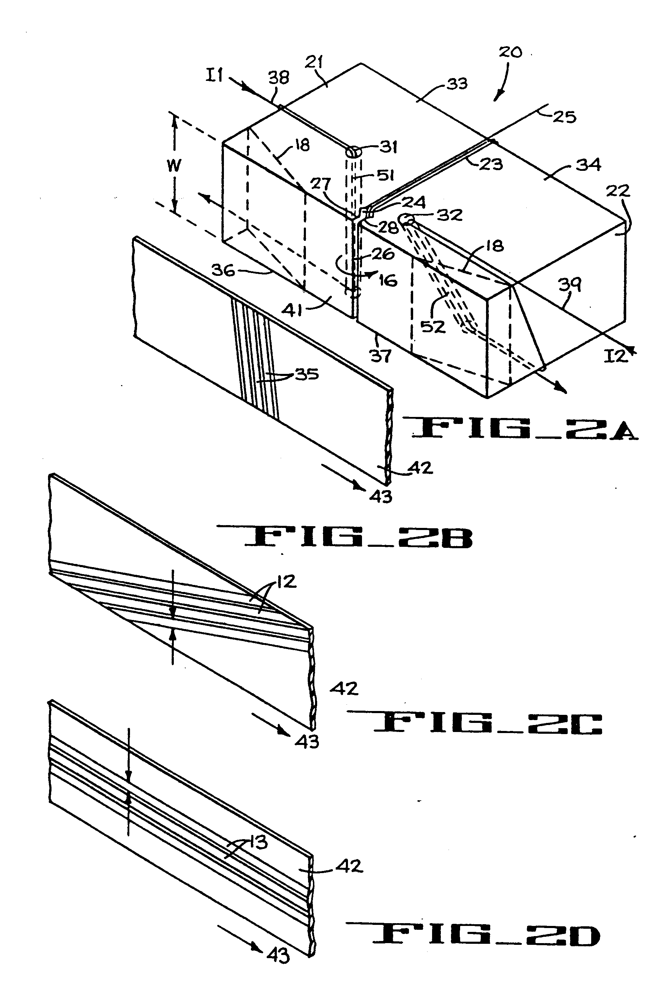

To facilitate further description, FIGURE 4 shows a more detailed schematic representation of the transducer 20. Two pairs of imaginary planes 44, 45 and 59, 60 are shown as being respectively superposed with the longitudinal axis of apertures 31, 32, respectively. Planes 44, 45 are parallel and intersect upper and lower lateral surfaces 33, 34 and 36, 37 respectively in lines parallel with the transducing gap plane 23. Planes 59, 60 intersect these lateral surfaces in lines perpendicular to the transducing gap plane 23.

It is seen from FIGURE 4 that the imaginary planes 44, 45, 59, 60, lateral surfaces 33, 34, 36, 37, gap plane 23 and face 41 form two oppositely oriented wedge sections 49, 50 each extending on the opposite side of the transducing gap plane 23. These wedge sections represent portions of magnetic cores 21, 22 to be selectively differentially saturated by the control currents I1, I2 to thereby define a desired transducing zone 56.

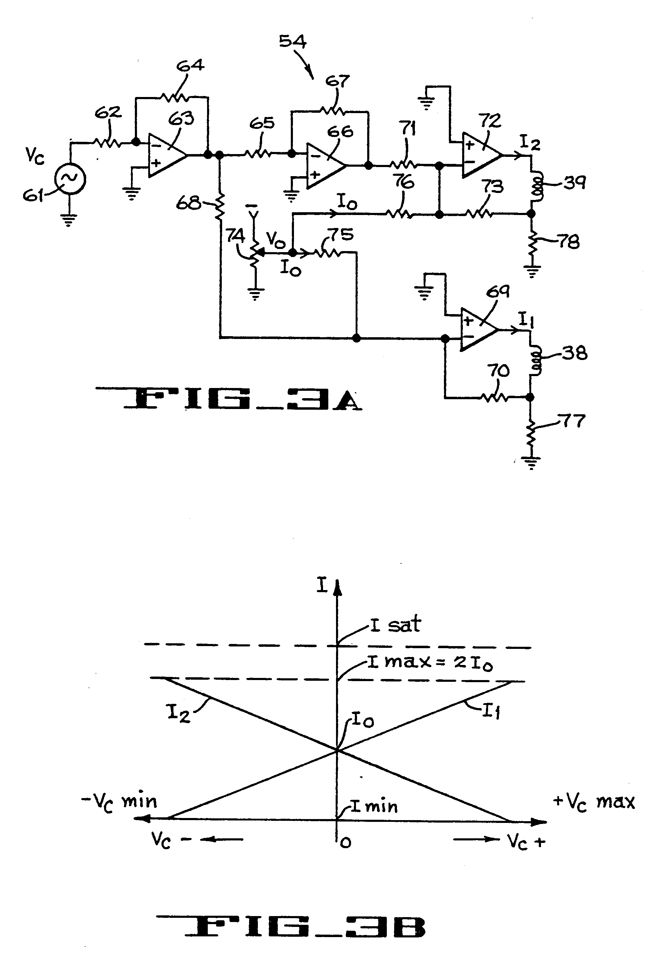

FIGURE 5 is an enlarged perspective view of one wedge section 50. Since both oppositely oriented wedge sections are substantially identical, the following description related to wedge section 50 also generally applies to wedge section 49. It is seen from FIGURE 4 that edge 30 of wedge section 50 in FIGURE 5 is defined as an intersection of imaginary planes 45, 60.

For a given width W of the transducing gap 26, wedge section 50 can be imagined as being divided into parallel cross-sectional areas LI to Ln, extending perpendicularly to both the gap plane 23, and the transducer face 41, respectively, and having gradually increasing surface areas along the gap width. It is understood that the oppositely oriented wedge section 49 of transducer 20 will have corresponding cross-sectional areas gradually increasing in the opposite direction (not shown).

With further reference to FIGURES 4 and 5, when current I2 is applied to the control winding 39, it induces in the core 22 a corresponding magnetic flux represented by flux lines 48 extending around the winding portion 52. Flux lines 48 do not extend across the transducing gap 26 nor do they link the transducing windings 25 to minimize any interference between the control flux and the transducing signal flux within the transducer.

To assure proper scanning operation along the width of the transducer to obtain transverse recording or playback, the values of the oppositely changing currents I1, I2 are selected such that the control fluxes 47, 48 induced thereby saturate in succession the continuously increasing cross sectional areas Ll to Ln of the respective oppositely oriented wedge sections 49, 50 within each magnetic core half 21, 22. For example when applying to the control winding 39 a gradually increasing current I2, as shown in FIGURE 3B, the cross-sectional areas Ll to Ln of FIGURE 5 become gradually saturated from the smallest to the largest area, in direct proportion to the increasing amplitude of the control current I2. By periodically increasing the control current in one control winding while periodically proportionally decreasing the control current in the other control winding, the respective portions Ll to Ln of oppositely oriented wedge sections 49, 50 become periodically differentially saturated. In the preferred embodiment of FIGURE 4 the sum of the differentially changing currents I1 + I2 is maintained constant to obtain a constant width W3 of the transducing zone 56 at the transducer face 41, as previously described. It is understood from the foregoing description that the permeability of the saturated regions is approximately equal to that of air while the overlapping unsaturated portions have a relatively high permeability as it is necessary for signal recording/reproduction.

It is seen from the characteristic of FIGURE 3B, that by changing the control voltage from -Vcmin to +Vcmax the control current value I1 changes from Imin to Imax, where Imax is selected below the saturation current level Isat. Isat corresponds to a current value which is sufficient to saturate all the cross-sectional areas Ll to Ln, that is the entire wedge section, without leaving an unsaturated area therein. Since it is necessary to assure that an unsaturated area will remain in each wedge section 49, 50 for obtaining an overlapping transducing zone, the maximum control current Imax must be selected below the saturation current level Isat.

As noted before, the wedge sections 49, 50 are imaginary and are shown only to facilitate description of the operation of the preferred embodiment of the transducer in accordance with the invention.

Preferably, the apertures 31, 32 within core halves 21, 22 are arranged such that substantially square cross-sectional areas Ll to Ln are obtained. The foregoing assures that the wedge sections 49, 50 including face 41 will be saturated prior to saturating other more remote core portions from the face part. At the same time control current values necessary to obtain saturation are minimized.

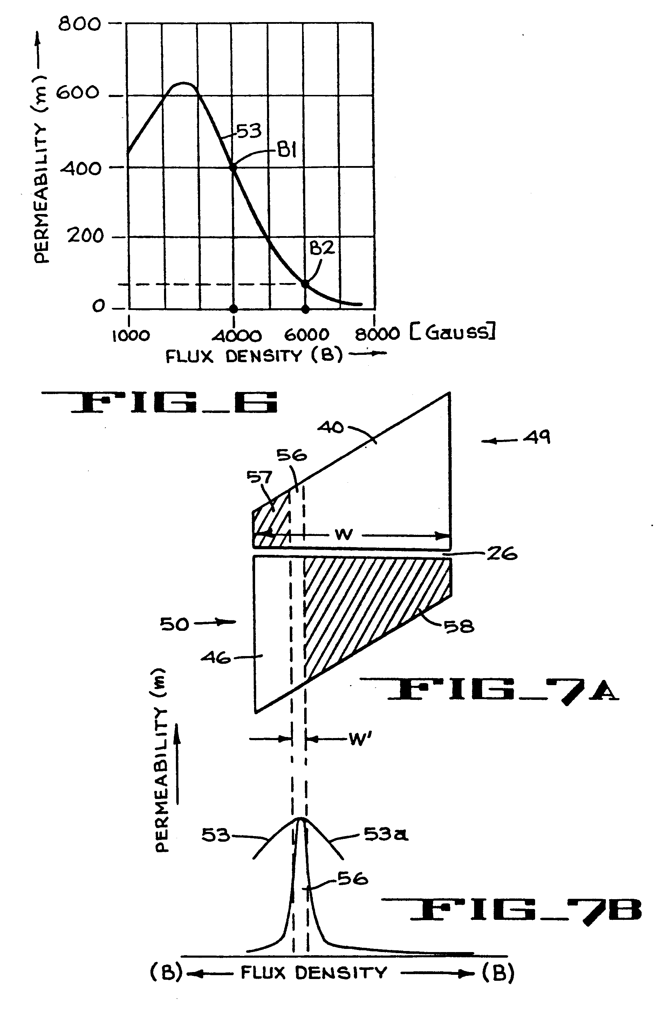

FIGURE 7B shows an example of two superposed flux density versus permeability characteristics 53, 53a, each corresponding to the characteristic of FIGURE 6, and each pertaining to one oppositely oriented wedge section 49, 50. FIGURE 7A is a schematic front view representation of wedge sections 49, 50 of FIGURE 4 rotated by 90 degrees. The cross-hatched areas 57, 58 represent the saturated regions that is, core portions having a permeability less than 100. The other core portions in FIGURE 7A represent nonsaturated highly permeable areas 40, 46 having a permeability over 400. The transducing zone 56 which extends across the transducing gap 26 and which is formed by the overlapping unsaturated highly permeable regions 40, 46, corresponds to overlapping portions of superposed characteristics 53, 53a which portions indicate permeability between 100 and 400. From FIGURES 7a and 7B it is seen that a well defined transducing zone 56 requires a characteristic having a permeability versus flux density gradient as sharp as possible. The latter requirement can be obtained by selecting a transducer core material with a steep characteristic curve and by designing the wedge section such that large flux density changes take place between adjacent cross-sectional areas over the entire scanning length. To further increase the permeability gradient a head core material is preferably used having a magnetic anisotrophy and oriented with an easy axis of magnetization perpendicular to the transducing gap plane.

To further maximize the flux density gradient between two adjacent cross-sectional areas for obtaining a desired maximum permeability versus flux density gradient, it is preferable to approximate the shape of the wedge sections to that of the characteristics of FIGURE 6, that is to obtain exponentially increasing cross sectional areas Ll to Ln of the wedge sections 49, 50. The foregoing can be obtained by providing an exponential shape of apertures 31, 32, extending through the cores 21, 22. However, with respect to design considerations, it may be difficult to form such an opening in a solid core of magnetic material.

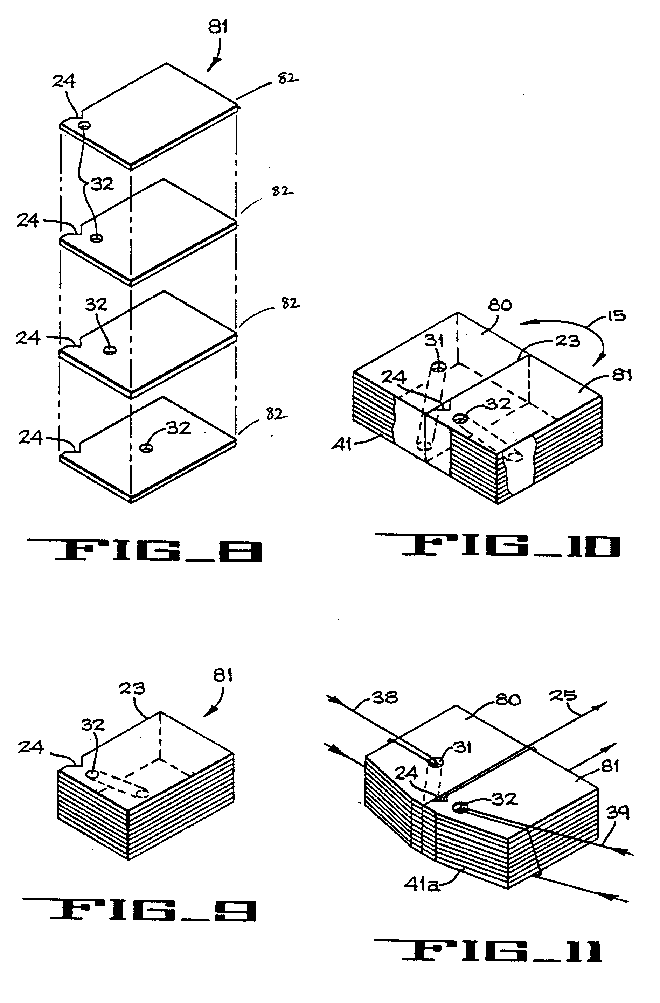

The manufacture of the transducer of FIGURES 2A and 4 is simplified, specifically with respect to obtaining an exponential wedge shape, by the embodiment of FIGURES 8 to 11 as described below.

FIGURE 8 shows an exploded perspective view of a preferred embodiment of a laminated magnetic core structure 81, comprising a plurality of thin magnetic lamination 82, for example 0.001 inches thick, of which only four laminations are shown for clarity. The laminations 82 may be, for example, etched from a sheet of a suitable magnetic material, for example, permalloy or mumetal HiMu 80. In FIGURE 8 the overall shape and size of all laminations is identical, with the exception of the apertures 32, which are progressively displaced from lamination to lamination in such a way that when all the respective laminations are stacked as shown in FIGURE 9 the resulting aperture corresponds to the previously described aperture 32 for accommodating the control windings 39 as shown in FIGURE 4.

9

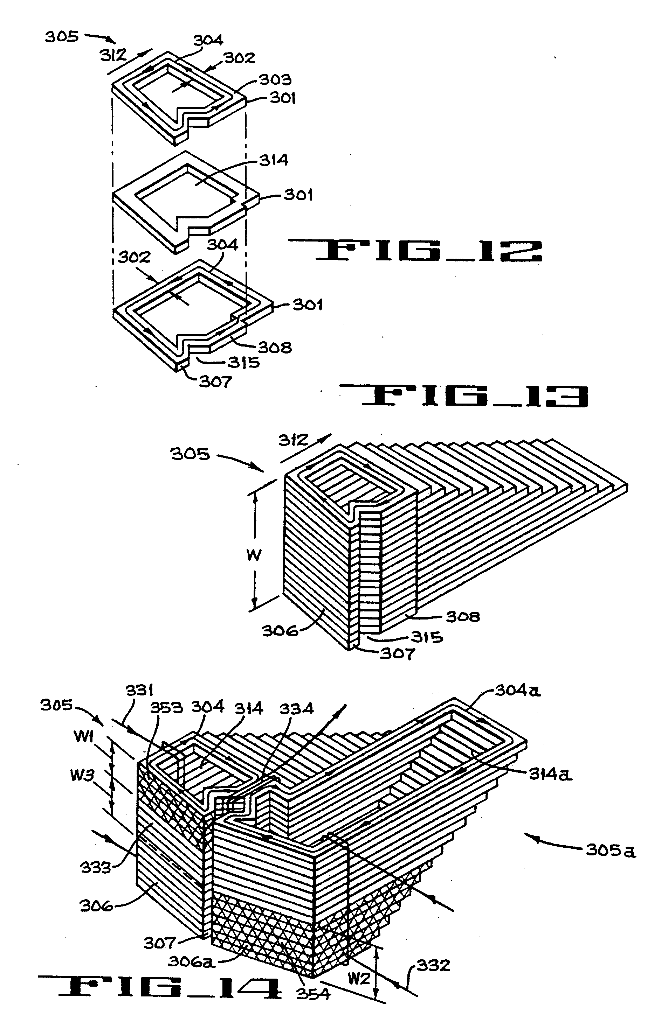

The stacked laminations of FIGURE 9 are bonded, for example by epoxy, utilizing well known bonding techniques to form a laminated head core half 81, which corresponds to the previously described half core 22 of FIGURE 4. Two corresponding laminated half cores 80, 81 are lapped at their respective gap planes 23 and a nonmagnetic transducing gap forming material, for example, silicon dioxide is vacuum sputtered thereon utilizing known sputtering techniques. The corresponding core halves 80, 81 are assembled in such a way that one core half is rotated 180 degrees with respect to the other core half as shown by arrow 15 in FIGURE 10 so that the respective control winding apertures 31, 32 extend inversely symmetrically to the gap plane 23 and face 41, respectively, similarly as previously described with respect to FIGURE 4.

The assembled core halves 80, 81 are bonded together with epoxy utilizing known bonding techniques. The resulting laminated core structure 80, 81 is preferably contoured at the transducer face 41 to obtain a desired contour as shown at 41a in FIGURE 11 and to obtain a desired transducing gap depth. Thereafter the control windings 38, 39 are arranged around each core half 80, 81 with their respective portions 51, 52 extending through apertures 31, 32 similarly as it has been described with reference to FIGURES 2A and 4. The transducing winding 25 is wound around the rear portion of cores 80, 81 generally symmetrically thereto through a winding window 24. It is noted, that the relative placement of transducing winding 25 with respect to the control windings 38, 39 is not critical in the embodiment of FIGURE 4 or 11, respectively, as long as the transducing winding does not link the control flux path.

While the embodiment of FIGURES 8 to 11 yields a resulting core structure which is basically similar to that of FIGURE 4, it has the advantage of eliminating drilling through the core to obtain control winding windows. It will be appreciated that by making each lamination 82 with a properly located control winding window therein, any desired window shape, for example exponential, can be obtained with relative ease.

A further preferred embodiment of the electromagnetically controlled scanning transducer of the invention is shown in FIGS. 12 to 16. As it will follow from the description below, this embodiment has an advantage over the previously described embodiments of obtaining a more uniform saturation of cross sectional areas in a direction perpendicular to the gap plane. In addition, a desired magnetic core shape, such as having exponentially increasing cross sectional areas can be obtained in a simplified manner. At the same time a desired sharp permeability-to-flux density gradient is obtained between the saturated and unsaturated regions at the transducer face, thereby enhancing the definition of the transducing zone.

With reference to FIGURE 12, a plurality of magnetic laminations 301 is stacked to form a laminated core stack 305. Each lamination has a central opening 314 which serves as a control winding window. A closed control flux path 304 is formed in the plane 303 of each lamination around the control winding window 314. Adjacent laminations in the stack 305 have gradually increasing lengths of control flux paths 304. The foregoing is obtained as shown in FIGURE 12, by gradually increasing the depth of adjacent laminations in the direction of arrow 312 thereby increasing the flux path reluctances. Preferably each lamination has the same thickness and a substantially constant width 302 in the direction perpendicular to the control flux path 304. As an example, the laminations 301 may be made of mumetal HiMu80, permalloy, or amorphous metal, having a thickness of 0.0001 to 0.001 inches.

A groove 315 for accommodating transducing windings is provided inwardly of a transducing gap plane 308. The depths of the laminations 301 may increase linearly, exponentially or in any other desired relationship to obtain the above-mentioned desired increase in flux path lengths. In this embodiment an exponential increase is provided to obtain a desired steep permeability versus flux density gradient between adjacent cross-sectional areas 303 across the transducer width W for reasons previously described with reference to the foregoing transducer embodiment.

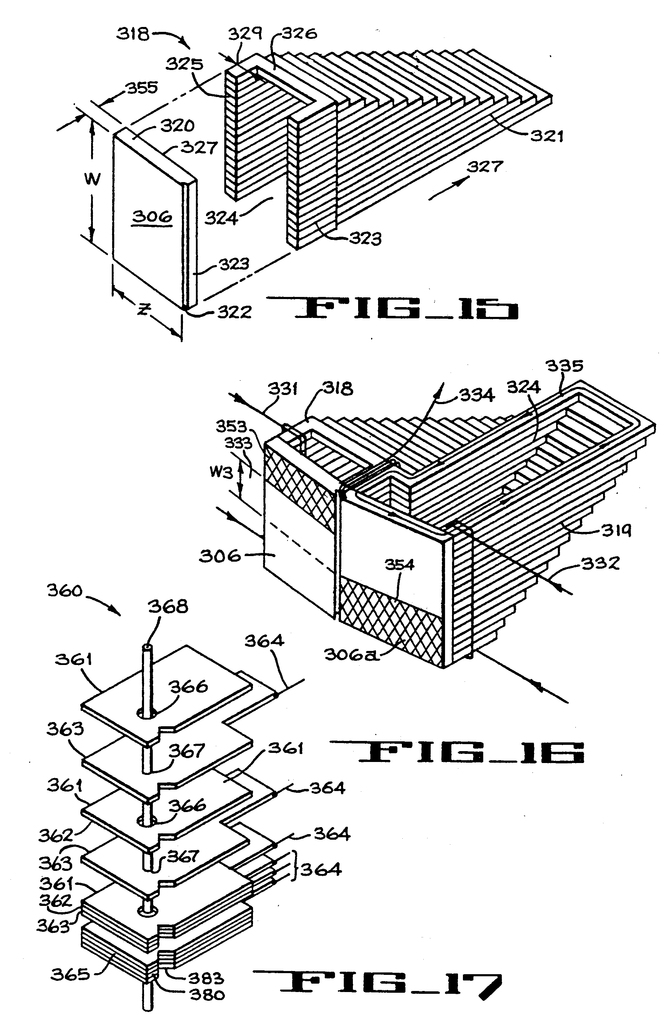

The stacked laminations 301 are bonded together in a manner similar to the previously described embodiment of FIGURES 8 to 11. A resulting half-core stack 305 is shown in FIGURE 13. Two corresponding stacks 305, 305a are assembled and joined together as shown in FIGURE 14, with their respective transducing gap planes 308 abutting and with a nonmagnetic transducing gap forming material disposed therebetween, utilizing techniques similar to those previously described with respect to the embodiment of FIGURES 8 to 11. It is seen from FIGURE 14 that the corresponding core stacks on each side of the transducing gap are oppositely oriented as follows. These core stacks are assembled such that the control flux path lengths 304, 304a in each core 305, 305a, increase in opposite directions across the width W of the transducer. These gradually increasing flux path lengths serve to obtain differential saturation at the face 306 on opposite sides of the transducing gap 307, for example, as shown by cross-hatched areas 353 and 354 in FIGURE 14. Respective widths W1, W2 of the saturated regions 353, 354 are selected such that a desired unsaturated, highly permeable transducing zone 333 of a desired width W3 is obtained at the face 306 by overlapping unsaturated regions, similarly as previously described with reference to FIGURE 4.

As shown in FIGURE 14, respective control windings 331, 332 are wound around each core half 305, 305a through control winding windows 314, 314a, preferably in the proximity of the transducer face 306, 306a. A transducing signal winding 334 is wound around the assembled cores 305, 305a through the transducing winding window 315. Transducing zone 333 can be scanned across the width W of the transducer for example by utilizing a control circuit similar to that previously described with reference to FIGURE 3A.

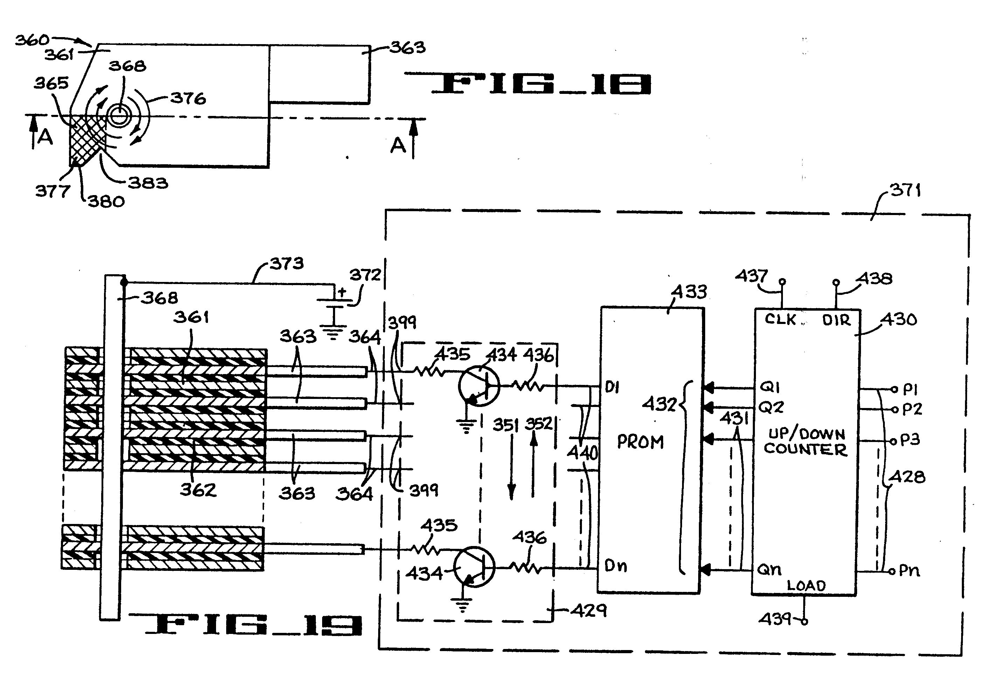

A variation in the design of transducer structure of FIGURES 12 to 14 is described below with reference to FIGURES 15 and 16.

FIGURE 15 shows one half of a composite head core 318 which differs from the above-described core 305 of FIGURE 13 in that it has a monolithic front core 320 and a laminated back core 321, which are integrally joined together, for example by epoxy bonding at confronting surfaces 325, 327 to eliminate air gaps. The front core 320 may be made, for example, from a block of magnetic ferrite material such as PS52B. A groove 322 is provided in front core 320 inwardly of a transducing gap plane 323 to obtain a transducing winding window.

The laminated back core 321 is formed of a plurality of individual U-shaped laminations 326 in a manner similar to that previously described with respect to FIGURES 12 to 14, with the exception of having an open control winding window 324 extending inwardly of a front surface 325. The respective laminations have a substantially constant width 329 in the direction perpendicular to a control flux path 335 extending in the lamination plane as it has been previously described with respect to FIGURE 12 and as shown in FIGURE 16. Similarly as in the embodiment of FIGURE 14, adjacent laminations have gradually increasing depths in the direction 328 to obtain oppositely increasing control flux paths lengths and thus oppositely increasing reluctances in each core 318, 319 across the transducer width W. While that increase may be linear, it is preferably exponential, to maximize the permeability to flux density gradient as previously described with reference to the foregoing embodiments of the invention.

The integrally joined front core 320 and back core 321 form a closed low reluctance control flux path as shown at 335 in FIGURE 16. The respective back core laminations in the stack 321 are in close physical contact with each-other to reduce magnetic losses. Further assembly of the oppositely oriented corresponding cores 318, 319, and providing them with transducing and control windings is similar to above-described FIGURES 12 to 14 and therefore the description thereof will not be repeated herein.

It follows from the above description that in the embodiment of FIGURES 12 to 16, a substantially constant cross sectional area of the laminations is maintained in a direction perpendicular to the control flux path while the lengths of control flux paths gradually increase differentially, that is in opposite directions in the confronting cores 318, 318a. To assure that the face 306, 306a of the transducer will become saturated before saturating the other magnetic core portions, in the embodiments of FIGURES 12 to 16 the width 329 of the flux path 304 along the face 306, 306a is preferably made slightly smaller than the width along the rest of the flux path.

It is an additional advantage of the embodiments of FIGURES 15, 16 that the monolithic front core 320 may be made of a material different from the back core 321. For example the front core material may have magnetic anisotrophy with an easy axis of magnetization oriented in perpendicular to the transducing gap plane to further enhance the transducing zone definition.

It is seen from comparison with the embodiment of FIGURE 4 that progressive saturation of the oppositely oriented confronting cores 305, 305a having gradually increasing control flux paths lengths in opposite directions is similar to saturating the oppositely oriented wedge sections of the embodiment of FIGURE 4. Consequently, the operation of the embodiments of FIGURES 12 to 16 and of FIGURE 4 is similar in that the transducer face is differentially saturated on opposite sides of the transducing cap and that a high permeability transducing zone is formed which can be continuously moved or scanned along the transducer width. However, in the embodiments of FIGURES 12 to 16 are different in that the entire lamination planes are saturated including the face 306, 306a rather than only a portion thereof as in the previous embodiments.

It will be understood that the laminated cores in the above-described embodiments are provided for manufacturing convenience, particularly, to facilitate obtaining a desired core shape, such as having exponentially increasing cross-sectional areas. Consequently, these magnetic laminations are in physical contact with each other and no magnetic or electrical insulation is needed between them.

An alternative embodiment of the present invention will be described now with reference to FIGURES 17 to 25, where saturation of the face part is obtained by a control winding in the form of a conductive drive line 368, 368a extending through each confronting core, respectively, in close proximity to both the transducer face and transducing gap, respectively.

In this embodiment the scanning transducer half-core 360 has discrete magnetic laminations 361 whose magnetic circuits are separated from each-other by nonmagnetic, electrically conductive laminations 363. The laminations 363 are conductively connected to the drive line 368 and each two conductive laminations and a portion of the drive line between them represent a current turn around a magnetic lamination 361. Each magnetic lamination becomes saturated by applying control current to surrounding conductive laminations and thus to a corresponding portion of the drive line extending therethrough. A transducing zone is obtained by one or more non-saturated laminations and it can be scanned or moved along the transducer width by switching on/off conductive laminations representing current turns, as it is described below in more detail.

In addition to saturating the transducer face the presently described embodiment has a further advantage over the prior art transducers that a sharp step-like permeability-to-flux density gradient across the transducer face is obtained. That characteristic is virtually independent of the permeability versus flux density characteristic of the magnetic lamination materials, as it will follow form further description.

FIGURE 17 shows an exploded view of one transducer core half 360 in which magnetically permeable laminations 361 are stacked and interposed between conductive laminations 363. A layer of electrically insulating material 362, for example silicon dioxide 0.0001 inch thick is preferably sputtered on the respective planar surfaces of each magnetic lamination 361 to electrically insulate them from the conductive laminations 363. Each conductive lamination 363 has a lead wire 364 attached thereto, for example by soldering, at a rear portion thereof, opposite a transducer face 365. As an example, the magnetic laminations may be made of mumetal HiMu80 or amorphous metal, 0.001 inch thick, the conductive laminations of copper, 0.0005 inch thick. The respective laminations 361, 363 have overlapping apertures 366, 367 provided therein to accommodate a conductive drive line 368 which is conductively connected to each lamination 363, for example by soldering, but it is electrically insulated from the magnetic laminations.

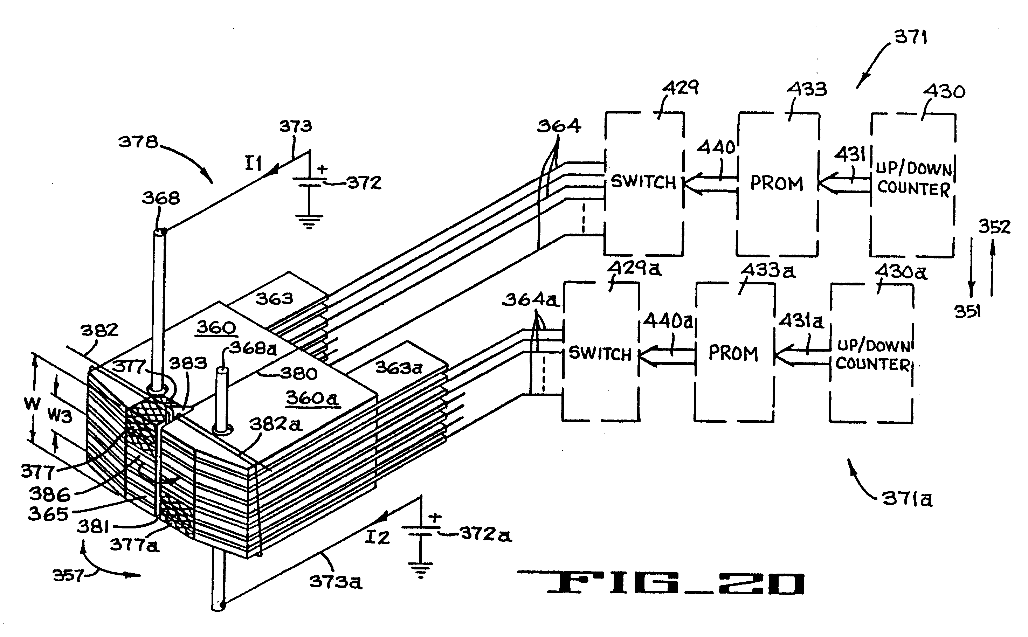

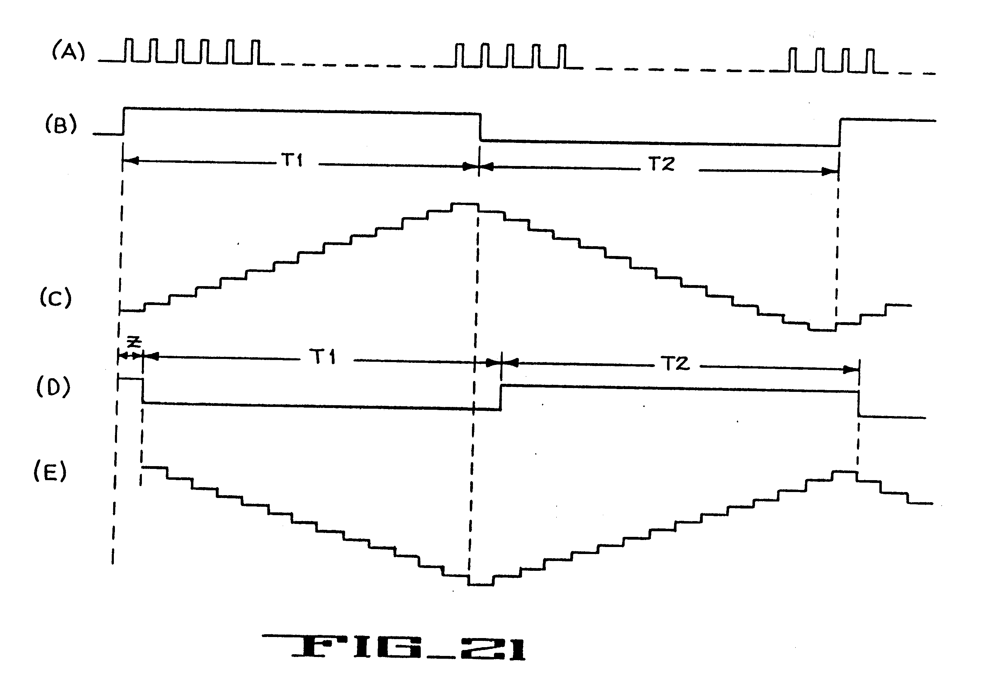

FIGURE 18 shows a plan view of the assembled laminated half-core stack 360 of FIGURE 17. FIGURE 19 shows a cross-sectional view of the lamination stack 360 taken along line A-A of FIGURE 18, and a schematic block diagram of a lamination switcher circuit 371 connected to the stack. Because of preferably utilizing two identical conductive lamination switcher circuits 371, 371a as it is shown in FIGURE 20, only one circuit 371 is shown in FIGURE 19 in more detail and will be described below.

As it is seen from FIGURE 19, one end of the conductive drive line 368 is connected via line 373 to one pole of a control current source 372, whose other pole is grounded. Each lead wire 364 is connected to one of a plurality of outputs 399 of the conductive lamination switcher circuit 371.

As an example, the conductive lamination switcher circuit 371 comprises an up/down counter 430, a programmable read only memory (PROM) 433 and a transistor switch array 429. The switch array 429 comprises a plurality of transistor switches each having a transistor 434, a current setting collector resistor 435 and a base resistor 436. The up/down counter 430 has a clock signal input 437, a directional signal input 438, preset inputs PI to Pn 428, a load input 439, and a plurality of outputs QI to Qn 431. Each output 431 is connected to one input 432 of PROM 433. PROM 433 has a plurality of outputs DI to Dn 440, each connected to the base resistor 436 of one switch 434 of the array 429. Each collector resistor 435 is connected to one conductive lamination 363 via a lead wire 364, respectively. The emitter of each transistor 434 is grounded.

FIGURE 20 shows an electromagnetically controlled scanning a magnetic transducer 378 obtained by joining two corresponding core halves 360, 360a. A transducing gap 381 of a suitable nonmagnetic material, for example silicon dioxide is provided on the transducing gap plane 380 of one or both core halves 360, 360a utilizing well known gap forming techniques. The respective core halves 360, 360a are assembled together inversely symetrically as follows. The core halves are reversed by rotating one core half 180 degrees with respect to the other core half, as indicated by arrow 357, so that the respective ends of conductive rods 368, 368a which are connected to current sources 372, 372a are reversed with respect to each-other, that is they are located on opposite sides across the transducer width W. A transducing signal winding 382, 382a is wound around the core halves and through a winding window 383 for use as a record/playback signal winding. The respective conductive laminations 363, 363a, of each core half 360, 360a are coupled via respective lamination switcher circuits 371, 371a to current sources 372, 372a to magnetically saturate sequentially the face of selected laminations in each core half, as it will be described below.

An example of the operation of the scanning transducer of FIGURE 20 will be described now with reference to FIGURES 21 to 25.

With reference to FIGURES 20 and 21, counters 430, 430a at their clock inputs receive a clock signal A having a frequency corresponding to a desired lamination switching frequency. One counter, for example 430 receives at input 438, a directional signal B, while the other counter, for example 430a receives a directional signal D of opposite polarity with respect to signal B. One of the counters is preset at 428 to an initial count which differs from the preset count of the other counter to obtain an offset count corresponding to a line interval Z as shown in FIGURE 21. When one counter, for example 430 counts up, as it is shown at C in FIGURE 21, the other counter 430a counts down simultaneously therewith, as shown at E. PROM's 433, 433a are programmed to convert the sequential binary count obtained at outputs 431, 431a of counters 430, 430a to a sequential output signal at outputs 440, 440a as shown, for example in TABLE 1 below:

| Binary output at 431: | Output signal at 440: | | | | |
|---|---|---|---|---|---|
| P1 to Pn | D1 | D2 | D3 | D4 | D5...Dn |
| 0 | 0 | 0 | 0 | 0 | 0....0 |
| 1 | 1 | 0 | 0 | 0 | 0....0 |
| 2 | 1 | 1 | 0 | 0 | 0       0 |
| 3 | 1 | 1 | 1 | 0 | 0       0 |
| 4 | 1 | 1 | 1 | 1 | 0       0 |
| 5 | 1 | 1 | 1 | 1 | 1... 0 |
| . | . | . | . | . | ...... |
| . | . | . | . | . | ...... |
| . | . | . | . | . | ...... |
| . | . | . | . | . | ...... |
| n | 1 | 1 | 1 | 1 | 1....1 |

TABLE 1

As it is seen from FIGURE 19 when any output Dl to Dn at 440 is activated, the particular transistor switch 434 connected thereto is switched on and it connects the particular conductive lamination 363 to the current source via a portion of the lead wire 364 and ground.

With further reference to FIGURE 19 it is seen that when the uppermost conductive lamination 363 at the top of the stack 360 is connected with the current source 372, the first magnetic lamination 361 is threaded by the control current turn. When the next transistor switch is activated in the direction of the arrow 351, both the first and the second magnetic laminations 361 will be threaded by the current turn, and so on, until the lowermost lamination of the stack is switched into the circuit, when all the magnetic laminations 361 of the stack are threaded by the current turn.

In each magnetic lamination which is threaded by a control current carrying turn, a magnetic flux is induced around the drive line 368, as shown by flux lines 376 in FIGURE 18. The magnitude of the control current in the drive line 368 is selected large enough to saturate a portion of each surrounding lamination. The saturated portion extends in an area defined by the face 365, transducing gap plane 380 and the drive line 368, as indicated by a cross-hatched area 377 in FIGURES 18 and 20.

From a comparison with the previously described embodiment shown in FIGURES 2A and 4 it is seen that the relatively close location of the drive line 368 to both the face 365 and the transducing gap plane 380 in FIGURE 19 is similar to the location of the winding portion 51 within core 21 of FIGURES 2A and 4.

13

However, in that previously described embodiment the gradual saturation of the face within each core is obtained by a selected angled relationship of the control winding portion 51 to the face and gap plane, respectively, and by selectively varying the magnitude of a control current applied to the control winding. The present embodiment differs in that the saturated region of the transducer is obtained by selectively applying a control current to a portion of the conductive drive line which in turn saturates the face part only of those magnetic laminations which are threaded by the current turn. The saturated region is moved or scanned across the transducer width by switching the control current into different portions of the drive line.

To obtain saturation at the face 365 of each lamination 361 prior to saturating other more distant portions thereof, the drive line 368 is preferably arranged relatively close to face 365 and gap plane 380 and substantially at equal distances therefrom.

With reference to FIGURE 20, to obtain scanning of the transducing zone 386 across the transducer width W, one switcher circuit for example 371 is switched in one direction, for example as indicated by arrow 351 while the other switcher circuit 371a is switched synchronously therewith in the opposite direction 352. Thereby control current I1 from the current source 372 is sequentially applied to conductive laminations 363 of one core half 360, as it has been described with reference to FIGURE 19. The other switcher circuit 371a applies a current I2 from source 372a sequentially to conductive laminations 363a of the other core half 360a. The thusly oppositely switched control currents I1, I2 gradually saturate the face portions of confronting core halves in opposite directions across the transducer width while the number of active conductive laminations of each core varies inversely linearly, to maintain a constant transducing zone width. The previously mentioned counter offset Z obtained by pre-setting one of the counters with respect to the other counter assures that one or more laminations in each stack will remain unsaturated at any time to obtain an overlapping transducing zone 386 across the gap 381, having a desired constant width W3.

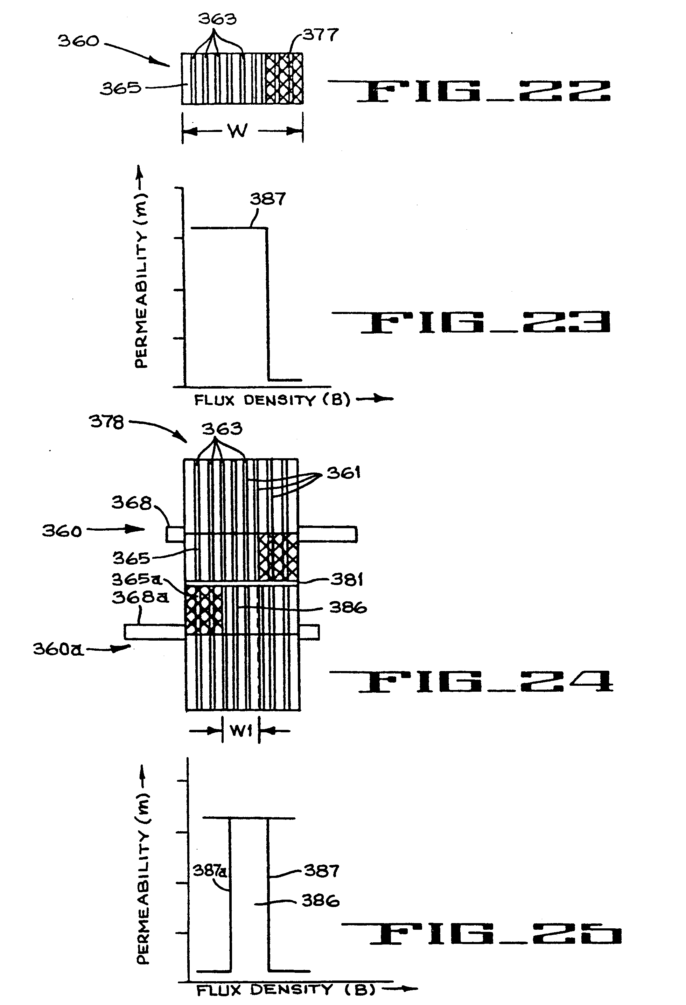

The operation of the scanning transducer of FIGURES 17 to 20 is further explained with reference to FIGURES 22 to 25. FIGURE 22 is a schematic front view of the face portion 365 of one core half 360 of FIGURE 20, rotated by 90 degrees. A saturated portion 377 is shown by a cross-hatched area. For better comparison with the previously described characteristic of FIGURES 6 to 7B, as an example, a similar magnetic material is selected for the laminations 361, preferably mumetal HiMu80. In FIGURE 23 a flux density (B) versus permeability (m) characteristic 387 of the transducer face part 365 of FIGURE 22 is shown.

It is seen from FIGURE 23 that the presently described embodiment of the invention has the advantage of obtaining a sharp step-like permeability-to-flux density gradient across the transducer width W. The latter feature results from separately "threading" each lamination by a respective control current turn. Consequently, while control current is supplied to a particular current winding surrounding a magnetic lamination to saturate its face part, an adjacent magnetic lamination, which has its control current turned off will not have any control flux induced therein. Thus a desired sharp change in flux density versus permeability results between adjacent non-saturated and saturated areas of the face part which change is virtually independent of the permeability versus flux density characteristic of the magnetic lamination material.

FIGURE 24 is a schematic front view of the face portions 365, 365a of the oppositely oriented assembled core halves 360, 360a shown in FIGURE 20, rotated by 90 degrees. By opposite orientation it is understood that the respective control currents of each core half are switched in opposite directions across the width of the transducer to obtain differential saturation of the transducer face on opposite sides of the transducing gap 381, as it has been described with reference to FIGURE 20.

FIGURE 25 illustrates two superposed oppositely oriented characteristics 387, 387a of FIGURE 23each representing the characteristic of one core half 360, 360a of FIGURE 24. A resulting well defined high permeability transducing zone 386 is obtained as shown by an area between the superposed characteristics.

It will be understood from the foregoing description that scanning or moving of the transducing zone 386 along the width W of the transducer in this embodiment is provided in discrete steps across the transducer width, each step corresponding to the combined thicknesses of a magnetic lamination, a conductive lamination and insulation layers, respectively.

It will be further understood that other implementations of the switcher circuits 371, 371a are possible. For example, instead of utilizing circuits 429, 430 and 433 of FIGURE 19, switching of the laminations may be accomplished by utilizing a plurality of resistors (not shown), each resistor having a terminal connected to one conductive lamination. The values of the resistors connected to adjacent laminations of each core half increase in opposite directions across the transducer width. The other terminals of the resistors of each core half are connected to one pole of a variable voltage source, while the other, opposite pole of the voltage source is connected to one end of the conductive drive line. By varying the voltage in each core

# EP 0 171 957 B1

half in opposite directions, the subsequent laminations of the opposite stacks become sequentially differentially saturated similarly as it has been described with respect to the embodiment of FIGURES 17 to 25.

As a further alternative, instead of scanning the transducing zone symmetrically in both directions as shown at C and E in FIGURE 21, where the respective time intervals T1, T2 are equal, it is possible to shorten one of the intervals with respect to the other one. Thus a relatively long scanning interval in one direction and a fast return of the scanning zone in the other direction can be obtained by adjusting the timing of the switcher circuits 371, 371a accordingly.

## Claims

1. A magnetic transducer, comprising a magnetic core having confronting core portions (20,21) with poles abutting at a transducing gap plane to define a transducing gap (26) therebetween, and control means associated with each core portion to provide control flux therein to provide by selective saturation of the core portions a permeable transducing zone, characterised in that the said control means and the core portions are disposed so that the said control flux saturates selectively a face portion (57,58), adjacent said transducing gap, of the respective core portion, such that each saturated face portion delimits in a respective one of two opposite directions a respective adjacent nonsaturated permeable face portion, said permeable face portions overlapping across the transducing gap to define the permeable transducing zone (56).

2. A magnetic transducer according to claim 1 wherein the core portions have reluctances increasing in opposite directions along the transducer's width.

3. A magnetic transducer according to claim 1 or 2 further comprising a transducing winding (25,334 etc.) engaging said magnetic core.

4. A magnetic transducer according to any foregoing claim wherein each control means comprises a control winding (38,39; 331,332; 368,368a) extending across a width of one core portion and coupled to receive a control current for selectively saturating said face portion.

5. A magnetic transducer according to claim 4 wherein each said control winding (38,39) extends across the respective core portion in oppositely oriented angular relationship with respect to said transducing gap plane and to said transducer face respectively, to obtain selectively differentially saturated core portions in the form of oppositely oriented wedge sections having cross-sectional areas gradually increasing in opposite directions on either side of said transducing gap and along the width thereof.

6. A magnetic transducer according to claim 5 wherein each magnetic core portion has an aperture (31,32) provided therein for accommodating one of the said control windings.

7. A magnetic transducer according to claim 6 wherein said apertures (31,32) extend in a substantially straight path across said transducer width.

8. A magnetic transducer according to claim 6 wherein said apertures extend in a substantially exponential path across said transducer width.

9. A magnetic transducer according to claim 5 wherein said gradually increasing cross-sectional areas are substantially square-shaped and extend perpendicularly to both said transducing gap plane and to said transducer face, respectively.

10. A magnetic transducer according to claim 5 wherein each magnetic core portion comprises a plurality of stacked magnetic laminations (72) and each said lamination has an aperture (32) for accommodating the respective control winding, said apertures being progressively displaced in opposite directions in adjacent laminations of each stack to obtain said oppositely oriented angular relationship.

11. A magnetic transducer according to claim 10 wherein said magnetic laminations (72) of each core are in physical contact with adjacent laminations.

EP 0 171 957 B1

**12.** A magnetic transducer according to claim 11 wherein said apertures (32) are displaced to form a substantially linear path.

**13.** A magnetic transducer according to claim 11 wherein said apertures (32) are displaced to form a substantially exponential path.

**14.** A magnetic transducer according to claim 4 wherein each magnetic core portion (305) provides a control flux path extending substantially perpendicular to both said transducing gap plane and said transducer face.

**15.** A magnetic transducer according to claim 14 wherein each core portion has a central control winding window (314) to accommodate said control winding and wherein said control flux paths have a substantially constant width defined by said central control winding windows and wherein said increasing reluctances are each constituted by a gradual increase in the length of the respective flux path.

**16.** A magnetic transducer according to claim 15 wherein each magnetic core portion (305) has a gradually increasing depth in the direction of a transducing gap depth, said depths in each core increasing in opposite directions along the width of said transducer to obtain the gradually increasing flux path lengths.

**17.** A magnetic transducer according to claim 14 wherein each magnetic core portion comprises a plurality of stacked magnetic laminations (301), each lamination having a closed central aperture (314) corresponding to said central control winding window subsequent laminations in each core having gradually increasing depths in the direction of a transducing gap depth.

**18.** A magnetic transducer according to claim 14 wherein each magnetic core portion comprises a monolithic front core portion (320) and a laminated back core portion comprising a plurality of stacked magnetic laminations (326) each having a substantially U-shaped central aperture (324) corresponding to said central control winding window, and wherein said gradually increasing reluctances are constituted by a gradual increase in the depth of the laminations of each core.

**19.** A magnetic transducer according to claim 18 wherein said monolithic front core portion (320) is made of a magnetic material having an easy axis of magnetization in a direction perpendicular to the transducing gap plane.

**20.** A magnetic transducer according to claim 14 wherein said control flux paths along said transducer face have a relatively smaller width with respect to the other portions of the core.

**21.** A magnetic transducer according to claim 2 wherein each magnetic core portion provides a control flux path in a plane extending substantially perpendicular to both said transducing gap plane and said transducer face, said planes including wedge sections having cross-sectional areas gradually increasing in opposite directions on either side of said transducing gap plane and along the width thereof that constitute the gradually increasing reluctances.

**22.** A magnetic transducer according to claim 2 wherein each magnetic core portion provides a control flux path extending substantially perpendicular to both said transducing gap plane and said transducer face that has a substantially constant width, said control flux paths having lengths gradually increasing in opposite directions on either side of said transducing gap plane and along the width thereof that constitute the gradually increasing reluctances.

**23.** A magnetic transducer according to claim 22 wherein each magnetic core portion has a gradually increasing depth in the direction of a transducing gap depth, said depths in each core increasing in opposite directions along the width of said transducer to obtain said gradually increasing flux path lengths.

**24.** A magnetic transducer according to claim 22 wherein each magnetic core portion comprises a plurality of stacked magnetic laminations, said laminations in each core having gradually increasing depths in

16

the direction of a transducing gap depth along the transducer width.

**25.** A magnetic transducer according to claim 21 wherein said confronting magnetic core portions are each made of a monolithic magnetic material and wherein each core has an aperture (31,32) for accommodating one said control winding portion, respectively.

**26.** A magnetic transducer according to claim 21 wherein each magnetic core portion is made of a plurality of stacked magnetic laminations (72), each lamination comprising an aperture for accommodating the respective control winding and wherein said apertures are progressively displaced in successive laminations of each stack to obtain said angular relationship.

**27.** A magnetic transducer according to claim 24, wherein each lamination provides a control flux path having a susbstantially constant width.

**28.** A magnetic transducer according to claim 1 wherein the control means (38;368,39:368a) is arranged for applying control flux to one of said core portions to cause a region (57) of the associated face portion near one end of the transducer to be magnetically saturated and the remaining area of the face portion to be unsaturated and for applying control flux to the other core portion to cause a region of the face portion (58) associated with said other core portion near the opposite end of the transducer to be magnetically saturated and the remaining area of this face portion (58) to be unsaturated in a manner such that portions of the unsaturated areas of the two face portions (57,58) lie adjacent one another in a direction transverse to the width of said gap to define the permeable transducing zone (56), through which transducing flux enters and exits said face portions.

**29.** A transducer according to claim 1 or 28 wherein each core portion (20,21) has a magnetic reluctance gradient from one end to another in a direction along the width of said gap, the reluctance gradients of said core portions being oriented in opposite directions, and wherein each face portion is magnetically saturated at its end adjacent that end of the associated core portion which has the lower reluctance.

**30.** A magnetic transducer according to claim 1 or claim 28, wherein each core portion has a plurality of stacked magnetic laminations (361) separated by nonmagnetic conductive laminations (363), each said control means comprising a conductive drive line (368) extending across the width of the respective core portion inwardly of and at a selected distance from said transducing gap plane and the respective face portion, the drive lines being conductively connected with the conductive laminations of the respective core portion; and wherein said conductive laminations of each core portion are coupled to selectively apply control currents to said conductive drive lines respectively, for selectively saturating said face portions.

**31.** A magnetic transducer according to claim 30 in which the control means are arranged to gradually saturate the laminations at the respective face portions in respective opposite senses to move the transducing zone.

**32.** A magnetic transducer according to claim 30, wherein for each core portion the control means comprises a current source (372), one pole of the current source being coupled to one end of the respective conductive drive line, and switching means (429) for selectively connecting each conductive lamination to another, opposite pole of said current source.

**33.** A magnetic transducer according to claim 32 wherein the switching means (429) are coupled to sequentially connect adjacent conductive laminations of one core portion in one direction to their current source while sequentially disconnecting adjacent conductive laminations of the other core portion in said direction from their current source.

**34.** A magnetic transducer according to claim 30 wherein the control means (372,429) are arranged for sequentially applying respective control currents to the conductive laminations of the core portions in opposite order of succession to obtain in succession saturation of portions of selected magnetic laminations, such that at least one confronting magnetic lamination of each core portion is non-saturated, to provide the permeable transducing zone (386).

17

**Patentansprüche**

1. Magnetwandler mit einem Magnetkern, der sich gegenüberstehende Kernteile (20, 21) mit an eine Wandlerspaltebene anstoßenden Polen zur Bildung eines Wandlerspaltes zwischen sich besitzt, und den Kernteilen zugeordneten Steuermitteln zur Erzeugung eines Steuerflusses in diesen zwecks Realisierung einer permeablen Wandlerzone durch selektive Sättigung der Kernteile, **dadurch gekennzeichnet**, daß die Steuermittel und die Kernteile so angeordnet sind, daß der Steuerfluß einen dem Wandlerspalt benachbarten Flächenteil (57, 58) selektiv sättigt, derart, daß jeder gesättigte Flächenteil einen benachbarten nicht-gesättigten permeablen Flächenteil in einer jeweiligen Richtung von zwei entgegengesetzten Richtungen begrenzt und daß sich die permeablen Flächenteile zur Definition der permeablen Wandlerzone (56) über dem Wandlerspalt überlappen.

2. Magnetwandler nach Anspruch 1, in dem die Kernteile in entgegengesetzten Richtungen längs der Wandlerbreite zunehmende magnetische Widerstände besitzen.

3. Magnetwandler nach Anspruch 1 oder 2, weiterhin umfassend eine mit dem Magnetkern in Wirkverbindung stehende Wandlerwicklung (25, 334, usw).

4. Magnetwandler nach den vorhergehenden Ansprüchen, in dem die Steuermittel jeweils eine über eine Breite eines Kernteils verlaufende und einen Steuerstrom zur selektiven Sättigung des Flächenteils aufnehmende Steuerwicklung (38, 39; 331, 332; 368, 368a) umfassen.

5. Magnetwandler nach Anspruch 4, in dem jede Steuerwicklung (38, 39) in entgegengesetzt orientiertem Winkelzusammenhang in Bezug auf die Wandlerspaltebene bzw. die Wandlerfläche über den entsprechenden Kernteil verläuft, um selektiv differentiell gesättigte Kernteile in Form von entgegengesetzt orientierten Keilabschnitten mit Querschnittsbereichen zu realisieren, welche in entgegengesetzten Richtungen auf beiden Seiten des Wandlerspaltes und längs der Breite graduell zunehmen.

6. Magnetwandler nach Anspruch 5, in dem jeder Magnetkernteil eine in ihm vorgesehene Öffnung (31, 32) zur Aufnahme einer der Steuerwicklungen besitzt.

7. Magnetwandler nach Anspruch 6, in dem die Öffnungen (31, 32) in einem im wesentlichen gradlinigen Weg über die Wandlerbreite verlaufen.

8. Magnetwandler nach Anspruch 6, in dem die Öffnungen in einem im wesentlichen exponentiellen Weg über die Wandlerbreite verlaufen.

9. Magnetwandler nach Anspruch 5, in dem die graduell zunehmenden Querschnittsbereiche im wesentlichen quadratförmig sind und senkrecht sowohl zur Wandlerebene als auch zur Wandlerfläche verlaufen.

10. Magnetwandler nach Anspruch 5, in dem jeder Magnetkernteil eine Vielzahl von gestapelten magnetischen Lamellen (72) umfaßt, von denen jede eine Öffnung (32) zur Aufnahme der entsprechenden Steuerwicklung besitzt und die in entgegengesetzten Richtungen in benachbarten Lamellen jedes Stapels zur Realisierung des entgegengesetzt orientierten Winkelzusammenhangs fortschreitend versetzt sind.

11. Magnetwandler nach Anspruch 10, in dem die magnetischen Lamellen (72) jedes Kerns in körperlichem Kontakt mit benachbarten Lamellen stehen.

12. Magnetwandler nach Anspruch 11, in dem die Öffnungen (32) zur Bildung eines im wesentlichen linearen Weges versetzt sind.

13. Magnetwandler nach Anspruch 11, in dem die Öffnungen (32) zur Bildung eines im wesentlichen exponentiellen Weges versetzt sind.

14. Magnetwandler nach Anspruch 4, in dem jeder Magnetkernteil (305) einen im wesentlichen senkrecht sowohl zur Wandlerspaltebene als auch zur Wandlerfläche verlaufenden Steuerflußweg bildet.

15. Magnetwandler nach Anspruch 14, in dem jeder Kernteil ein zentrales Steuerwicklungsfenster (314) zur Aufnahme der Steuerwicklung besitzt, die Steuerflußwege eine durch die zentralen Steuerwicklungsfenster definierte im wesentlichen konstante Breite besitzen und die zunehmenden magnetischen Widerstände durch eine graduelle Längenzunahme der entsprechenden Flußwege realisiert sind.

16. Magnetwandler nach Anspruch 15, in dem jeder Magnetkernteil (305) eine graduell zunehmende Tiefe in Richtung einer Wandlerspalttiefe besitzt und die Tiefen in jedem Kern in entgegengesetzten Richtungen längs der Breite des Wandlers zur Realisierung der graduell zunehmenden Flußweglängen zunehmen.

17. Magnetwandler nach Anspruch 14, in dem jeder Magnetkernteil eine Vielzahl von gestapelten magnetischen Lamellen (301) umfaßt, von denen jede eine den zentralen Steuerwicklungsfenster entsprechende geschlossene zentrale Öffnung (314) besitzt, und aufeinanderfolgende Lamellen in jedem Kern graduell zunehmende Tiefen in Richtung einer Wandlerspalttiefe besitzen.

18. Magnetwandler nach Anspruch 14, in dem jeder Magnetkernteil ein monolithisches Vorderkernteil (320) und ein lamelliertes Hinterkernteil mit einer Vielzahl von gestapelten magnetischen Lamellen (326) umfaßt, die jeweils eine dem zentralen Steuerwicklungsfenster entsprechende im wesentlichen U-förmige zentrale Öffnung (324) besitzen, und in dem die graduell zunehmenden magnetischen Widerstände durch eine graduelle Zunahme der Tiefe der Lamellen jedes Kerns realisiert sind.

19. Magnetwandler nach Anspruch 18, in dem das monolithische Vorderkernteil (320) aus einem magnetischen Material mit einer leichten Magnetisierungsachse in Richtung senkrecht zur Wandlerspaltebene hergestellt ist.

20. Magnetwandler nach Anspruch 14, in dem die Steuerflußwege längs der Wandlerfläche in Bezug auf die anderen Teile des Kerns eine relativ kleinere Breite besitzen.

21. Magnetwandler nach Anspruch 2, in dem jeder Magnetkernteil einen Steuerflußweg in einer im wesentlichen senkrecht sowohl zur Wandlerspaltebene als auch zur Wandlerfläche verlaufenden Ebene bildet und die Ebenen Keilabschnitte enthalten, die in entgegengesetzten Richtungen auf beiden Seiten der Wandlerspaltebene und längs deren Breite graduell zunehmende Querschnittsbereiche besitzen, welche die graduell zunehmenden magnetischen Widerstände realisieren.

22. Magnetwandler nach Anspruch 2, in dem jeder Magnetkernteil einen im wesentlichen senkrecht sowohl zur Wandlerspaltebene als auch zur Wandlerfläche verlaufenden Steuerflußweg mit im wesentlichen konstanter Breite bildet und die Steuerflußwege in entgegengestzten Richtungen auf beiden Seiten der Wandlerspaltebene und längs deren Breite graduell zunehmende Längen besitzen, wodurch die graduell zunehmenden magnetischen Widerstände gebildet werden.

23. Magnetwandler nach Anspruch 22, in dem jeder Magnetkernteil eine graduell zunehmende Tiefe in Richtung einer Wandlerspalttiefe besitzt und die Tiefen in jedem Kern in entgegengesetzten Richtungen längs der Breite des Wandlers zur Realisierung der graduell zunehmenden Flußweglängen zunehmen.

24. Magnetwandler nach Anspruch 22, in dem jeder Magnetkernteil eine Vielzahl von gestapelten magnetischen Lamellen umfaßt, die in jedem Kern in Richtung einer Wandlerspalttiefe längs der Wandlerbreite graduell zunehmende Tiefen besitzen.

25. Magnetwandler nach Anspruch 21, in dem die sich gegenüberstehenden Magnetkernteile aus einem monolithischen magnetischen Material hergestellt sind und in dem jeder Kern eine Öffnung (31, 32) zur Aufnahme jeweils einer der Steuerwicklungen besitzt.

26. Magnetwandler nach Anspruch 21, in dem jeder Magnetkernteil aus einer Vielzahl von gestapelten magnetischen Lamellen (72) hergestellt ist, die jeweils eine Öffnung zur Aufnahme der jeweiligen Steuerkupplung besitzen, und in dem die Öffnungen in aufeinanderfolgenden Lamellen jedes Stapels zur Realisierung des Winkelzusammenhangs fortschreitend versetzt sind.

**27.** Magnetwandler nach Anspruch 24, in dem jede Lamelle einen Steuerflußweg mit im wesentlichen konstanter Breite bildet.

**28.** Magnetwandler nach Anspruch 1, in dem die Steuermittel (38; 368, 39:368a) dazu dienen, einen Steuerfluß in einen der Kernteile einzuspeisen, um einen Bereich (57) des zugehörigen Flächenteils nahe einem Ende des Wandlers magnetisch zu sättigen und den verbleibenden Bereich des Flächenteils ungesättigt zu lassen, und weiterhin dazu dient, einen Steuerfluß in den anderen Kernteil einzuspeisen, um einen Bereich des dem anderen Kernteil nahe dem entgegengesetzten Ende des Wandlers zugeordneten Flächenteil (58) magnetisch zu sättigen und den verbleibenden Bereich dieses Flächenteils (58) in der Weise ungesättigt zu lassen, daß Teile der ungesättigten Bereiche der beiden Flächenteile (57, 58) in einer Richtung quer zur Breite des Spaltes benachbart zueinander liegen, um die permeable Wandlerzone (56) zu definieren, durch die der Wandlerfluß in die Flächenteile eintritt und aus diesen austritt.

**29.** Wandler nach Anspruch 1 oder 28, in dem jeder Kernteil (20, 21) einen Gradienten des magnetischen Widerstandes von einem Ende zum anderen in einer Richtung längs der Breite des Spaltes besitzt, die Gradienten des magnetischen Widerstandes der Kernteile in entgegengesetzten Richtungen orientiert sind und jeder Flächenteil an dem Ende, das dem Ende des zugehörigen Kernteils mit kleinerem magnetischen Widerstand benachbart ist, magnetisch gesättigt wird.

**30.** Magnetwandler nach Anspruch 1 oder 28, in dem jeder Kernteil eine Vielzahl von durch nicht-magnetische leitende Lamellen (363) getrennte gestapelte magnetische Lamellen (361) besitzt, die Steuermittel jeweils eine über die Breite des entsprechenden Kernteils innerhalb der Wandlerspaltebene und dem entsprechenden Flächenteil in einem ausgewählten Abstand von diesen verlaufende leitende Treiberleitung (368) umfassen, die Treiberleitungen mit den leitenden Lamellen des entsprechenden Kernteils leitend verbunden sind; und in dem die leitenden Lamellen jedes Kernteils gekoppelt sind, um zur selektiven Sättigung der Flächenteile Steuerströme selektiv in die jeweiligen leitenden Treiberleitung einzuspeisen.

**31.** Magnetwandler nach Anspruch 30, in dem die Steuermittel zur graduellen Sättigung der Lamellen an den entsprechenden Flächenteilen in jeweils entgegengesetztem Sinn zwecks Bewegung der Wandlerzone ausgebildet sind.

**32.** Magnetwandler nach Anspruch 30, in dem die Steuermittel für jeden Kernteil jeweils eine Stromquelle (372), von der ein Pol mit einem Ende der entsprechenden leitenden Treiberleitung gekoppelt ist, sowie Umschaltmittel (429) zur selektiven Verbindung jeder leitenden Lamelle mit einem weiteren entgegengesetzten Pol der Stromquelle umfassen.

**33.** Magnetwandler nach Anspruch 32, in dem die Umschaltmittel (429) zur sequentiellen Verbindung benachbarter leitender Lamellen eines Kernteils in einer Richtung mit ihrer Stromquelle geschaltet sind, während benachbarte leitende Lamellen des Kernteils in dieser Richtung von ihrer Stromquelle abgeschaltet werden.

**34.** Magnetwandler nach Anspruch 30, in dem die Steuermittel (372, 429) zur selektiven Einspeisung jeweiliger Steuerströme in die leitenden Lamellen der Kernteile in entgegengesetzter Aufeinanderfolge ausgebildet sind, um in Folge eine Sättigung von Teilen ausgewählter magnetischer Lamellen zu realisieren, derart, daß zur Realisierung der permeablen Wandlerzone (386) wenigstens eine gegenüberstehende magnetische Lamelle jedes Kernteils nicht gesättigt ist.

**Revendications**

**1.** Transducteur magnétique, comprenant un noyau magnétique ayant des parties de noyau (20, 21) se faisant face avec des pôles aboutissant à un plan d'entrefer de transduction pour définir entre eux un entrefer de transduction (26), et un moyen de commande associé avec chaque partie de noyau pour y créer un flux de commande pour fournir, par saturation sélective des parties de noyau, une zone de transduction perméable, caractérisé en ce que lesdits moyens de commande et les parties de noyau sont disposés de telle manière que ledit flux de commande sature sélectivement une partie face (57, 58), adjacente audit entrefer de transduction, de la partie de noyau respective, de sorte que chaque

EP 0 171 957 B1

partie face saturée délimite, dans l'un respectif de deux sens contraires, une partie face perméable non saturée adjacente, lesdites parties faces perméables se chevauchant suivant l'entrefer de transduction pour définir la zone de transduction perméable (56).

2.  Transducteur magnétique selon la revendication 1, dans lequel les parties de noyau ont des réluctances croissantes dans des sens contraires suivant la largeur de transducteur.

3.  Transducteur magnétique selon la revendication 1 ou 2, comprenant en outre un enroulement de transduction (25, 334 etc.) coopérant avec ledit noyau magnétique.

4.  Transducteur magnétique selon l'une quelconque des revendications précédentes, dans lequel chaque moyen de commande comprend un enroulement de commande (38, 39 ; 331, 332 ; 368, 368a) traversant la largeur d'une partie de noyau et connecté pour recevoir un courant de commande pour saturer de manière sélective ladite partie face.

5.  Transducteur magnétique selon la revendication 4, dans lequel chacun desdits enroulements de commande (38, 39) traverse la partie de noyau respective dans une relation angulaire orientée en sens contraire par rapport, respectivement, audit plan d'entrefer de transduction et à ladite face de transducteur, pour obtenir des parties de noyau saturées sélectivement de façon différentielle sous la forme de parties en biseau orientées en sens contraires ayant des zones de section transversale croissant graduellement en sens contraires de chaque côté dudit entrefer de transduction et suivant la largeur de celui-ci.

6.  Transducteur magnétique selon la revendication 5, dans lequel chaque partie de noyau magnétique possède une ouverture (31, 32) qui y est prévue pour recevoir l'un desdits enroulements de commande.

7.  Transducteur magnétique selon la revendication 6, dans lequel lesdites ouvertures (31, 32) s'étendent en un trajet sensiblement rectiligne suivant ladite largeur de transducteur.

8.  Transducteur magnétique selon la revendication 6, dans lequel lesdites ouvertures s'étendent en un trajet sensiblement exponentiel suivant ladite largeur de transducteur.

9.  Transducteur magnétique selon la revendication 5, dans lequel lesdites zones de section transversale croissant graduellement sont sensiblement de forme carrée et s'étendent perpendiculairement, respectivement, à la fois audit plan d'entrefer de transduction et à ladite face de transducteur.

10. Transducteur magnétique selon la revendication 5, dans lequel chaque partie de noyau magnétique comprend une pluralité de stratifications magnétiques (72) empilées et chacune desdites stratifications possède une ouverture (32) pour loger l'enroulement de commande respectif, lesdites ouvertures étant décalées progressivement en sens contraires dans des stratifications adjacentes de chaque empilement pour obtenir ladite relation angulaire orientée en sens contraire.

11. Transducteur magnétique selon la revendication 10, dans lequel lesdites stratifications magnétiques (72) de chaque noyau sont en contact physique avec les stratifications adjacentes.

12. Transducteur magnétique selon la revendication 11, dans lequel lesdites ouvertures (32) sont décalées pour former un trajet sensiblement linéaire.

13. Transducteur magnétique selon la revendication 11, dans lequel lesdites ouvertures (32) sont décalées pour former un trajet sensiblement exponentiel.

14. Transducteur magnétique selon la revendication 4, dans lequel chaque partie de noyau magnétique (305) procure un trajet de flux de commande s'étendant sensiblement perpendiculairement à la fois audit plan d'entrefer de transduction et à ladite face de transducteur.

15. Transducteur magnétique selon la revendication 14, dans lequel chaque partie de noyau possède une fenêtre centrale d'enroulement de commande (314) pour loger ledit enroulement de commande et dans

21

lequel lesdits trajets de flux de commande ont une largeur sensiblement constante définie par ladite fenêtre centrale d'enroulement de commande et dans lequel lesdites réluctances croissantes sont chacune constituées par une augmentation graduelle de la longueur du trajet de flux respectif.

16. Transducteur magnétique selon la revendication 15, dans lequel chaque partie de noyau magnétique (305) a une profondeur croissant graduellement dans la direction de la profondeur de l'entrefer de transduction, lesdites profondeurs dans chaque noyau croissant en sens contraires suivant la largeur dudit transducteur pour obtenir les longueurs de trajet de flux croissant graduellement.

17. Transducteur magnétique selon la revendication 14, dans lequel chaque partie de noyau magnétique comprend une pluralité de stratifications magnétiques empilées (301), chaque stratification ayant une ouverture centrale fermée (314) correspondant à ladite fenêtre centrale d'enroulement de commande, lesdites stratifications qui se suivent dans chaque noyau ayant des profondeurs croissant graduellement dans la direction de la profondeur d'entrefer de transduction.

18. Transducteur magnétique selon la revendication 14, dans lequel chaque partie de noyau magnétique comprend une partie de noyau avant monolithique (320) et une partie de noyau arrière stratifiée comprenant une pluralité de stratifications magnétiques empilées (326) ayant chacune une ouverture centrale (324) sensiblement en forme de U, correspondant à ladite fenêtre centrale d'enroulement de commande, et dans lequel lesdites réluctances croissant graduellement sont constituées par une augmentation graduelle de la profondeur des stratifications de chaque noyau.

19. Transducteur magnétique selon la revendication 18, dans lequel ladite partie de noyau avant monolithique (320) est faite d'une matière magnétique ayant un axe privilégié de magnétisation dans une direction perpendiculaire au plan d'entrefer de transduction.

20. Transducteur magnétique selon la revendication 14, dans lequel lesdits trajets de flux de commande le long de ladite face de transducteur ont une largeur relativement plus petite par rapport aux autres parties du noyau.

21. Transducteur magnétique selon la revendication 2, dans lequel chaque partie de noyau magnétique procure un trajet de flux de commande dans un plan s'étendant sensiblement perpendiculairement à la fois audit plan d'entrefer de transduction et à ladite face de transducteur, lesdits plans incluant des parties en biseau ayant des zones de section transversale croissant graduellement en sens contraires de chaque côté dudit plan d'entrefer de transduction et suivant la largeur de celui-ci, ce qui constitue les réluctances croissant graduellement.

22. Transducteur magnétique selon la revendication 2, dans lequel chaque partie de noyau magnétique procure un trajet de flux de commande dans un plan s'étendant sensiblement perpendiculairement à la fois audit plan d'entrefer de transduction et à ladite face de transducteur qui a une largeur sensiblement constante, lesdits trajets de flux de commande ayant des longueurs croissant graduellement en sens contraires de chaque côté dudit plan d'entrefer de transduction et suivant la largeur de celui-ci, ce qui constitue les réluctances croissant graduellement.

23. Transducteur magnétique selon la revendication 22, dans lequel chaque partie de noyau magnétique a une profondeur croissant graduellement dans la direction de la profondeur d'entrefer de transduction, lesdites profondeurs dans chaque noyau augmentant en sens contraires suivant la largeur dudit transducteur pour obtenir lesdites longueurs de trajet de flux croissant graduellement.

24. Transducteur magnétique selon la revendication 22, dans lequel chaque partie de noyau magnétique comprend une pluralité de stratifications magnétiques empilées, lesdites stratifications dans chaque noyau ayant des profondeurs croissant graduellement dans la direction de la profondeur d'entrefer de transduction suivant la largeur de transducteur.

25. Transducteur magnétique selon la revendication 21, dans lequel lesdites parties de noyau magnétiques sont faites chacune d'une matière magnétique monolithique et dans lequel chaque noyau a une ouverture (31, 32) pour loger, respectivement, l'une desdites parties d'enroulement de commande.

**26.** Transducteur magnétique selon la revendication 21, dans lequel chaque partie de noyau magnétique est faite d'une pluralité de stratifications magnétiques empilées (72), chaque stratification comprenant une ouverture pour loger ledit enroulement de commande respectif et dans lequel lesdites ouvertures sont décalées progressivement dans les stratifications successives de chaque empilement pour obtenir ladite relation angulaire.

**27.** Transducteur magnétique selon la revendication 24, dans lequel chaque stratification procure un trajet de flux de commande ayant une largeur sensiblement constante.

**28.** Transducteur magnétique selon la revendication 1, dans lequel le moyen de commande (38 ; 368, 39 : 368a) est agencé pour appliquer un flux de commande à l'une desdites parties de noyau pour faire en sorte qu'une région (57) de la partie face associée, proche d'une extrémité du transducteur, soit magnétiquement saturée et que la zone restante de la partie face soit non saturée et pour appliquer le flux de commande à l'autre partie de noyau pour faire en sorte qu'une région (58) de la partie face associée avec ladite autre partie de noyau, proche de l'extrémité opposée du transducteur, soit magnétiquement saturée et que la zone restante de cette partie face soit non saturée, de telle manière que les parties des zones non saturées des deux parties faces (57, 58) se trouvent adjacentes l'une à l'autre dans une direction transversale à la largeur dudit entrefer pour définir la zone de transduction perméable (56), à travers laquelle le flux de transduction entre et sort desdites parties faces.

**29.** Transducteur magnétique selon la revendication 1 ou 28, dans lequel chaque partie de noyau (20, 21) peut avoir un gradient de réluctance magnétique à partir d'une extrémité jusqu'à l'autre dans une direction suivant la largeur dudit entrefer, les gradients de réluctance desdites parties de noyau étant orientés dans des sens contraires, et chaque partie face étant magnétiquement saturée à son extrémité adjacente à l'extrémité de la partie de noyau associé qui a la réluctance plus faible.

**30.** Transducteur magnétique selon la revendication 1 ou 28, dans lequel chaque partie de noyau possède une pluralité de stratifications magnétiques empilées (361) séparées par des stratifications conductrices non magnétiques (363), chacun desdits moyens de commande comprenant une ligne de pilotage (368) conductrice s'étendant transversalement à la largeur de la partie de noyau respective vers l'intérieur dudit plan d'entrefer de transduction et de la partie face respective, et à une distance déterminée de ceux-ci, les lignes de pilotage étant reliées de manière conductrice aux stratifications conductrices de la partie noyau respective ; et dans lequel lesdites stratifications conductrices de chaque partie de noyau sont connectées pour appliquer de manière sélective des courants de commande, respectivement, auxdites lignes de pilotage conductrices, pour saturer de manière sélective lesdites parties faces.

**31.** Transducteur magnétique selon la revendication 30, dans lequel les moyens de commande sont agencés pour saturer graduellement les stratifications des parties faces respectives dans des sens respectivement contraires pour déplacer la zone de transduction.

**32.** Transducteur magnétique selon la revendication 30, dans lequel pour chaque partie de noyau le moyen de commande comprend une source de courant (372), un pôle de la source de courant étant relié à une extrémité de la ligne de pilotage conductrice respective, et un moyen de commutation (429) pour relier de manière sélective chaque stratification conductrice à un autre pôle, opposé, de ladite source de courant.

**33.** Transducteur magnétique selon la revendication 32, dans lequel les moyens de commutation (429) sont connectés pour relier de façon séquentielle des stratifications conductrices adjacentes d'une partie de noyau dans un sens à leur source de courant tout en déconnectant les stratifications conductrices adjacentes de l'autre partie de noyau, dans ledit sens, de leur source de courant.

**34.** Transducteur magnétique selon la revendication 30, dans lequel les moyens de commande (372, 429) sont agencés pour appliquer séquentiellement des courants de commande respectifs aux stratifications conductrices des parties de noyau en ordre de succession inverse pour obtenir la saturation successive de parties de stratifications magnétiques sélectionnées, de telle manière qu'au moins une stratification magnétique située en face, de chaque partie de noyau soit non saturée, pour procurer la zone de transduction perméable (386).

FIG_1A

(PRIOR ART)

FIG_1B

FIG_1C

FIG_1D

FIG_1E

FIG_1F

FIG_2A

FIG_2B

FIG_2C

FIG_2D

FIG_3A

FIG_3B

FIG_4

FIG_6

**FIG_6**

**FIG_7A**

**FIG_7B**

**FIG_8**

**FIG_10**

**FIG_9**

**FIG_11**

FIG_12

FIG_13

FIG_14

FIG_15

FIG_16

FIG_17

EP 0 171 957 B1

**FIG_18**

360
361
363
368
365
376
A
A
377
380
383

**FIG_19**

371
373
372
368
361
363
364
399
433
437
438
CLK
DIR
430
435
434
436
D1
432
Q1
Q2
431
440
351 352
PROM
UP/DOWN COUNTER
P1
P2
P3
428
362
363
364
399
435
436
434
Dn
Qn
LOAD
Pn
429
439

FIG_20

FIG_21

FIG_22

FIG_23

FIG_24

FIG_25